# EUROPÄISCHE PATENTSCHRIFT

(11) **EP 2 861 055 B1**
(45) Veröffentlichungstag und Bekanntmachung des Hinweises auf die Patenterteilung: **02.05.2018**
(21) Anmeldenummer: 12728249.9
(22) Anmeldetag: 14.06.2012
(51) Int. Cl.: A01F 15/14, A01D 59/04, A01F 15/08

(54) **GARNKNOTER**
TWINE KNOTTER
DISPOSITIF DE NOUAGE DE FILS

(43) Veröffentlichungstag der Anmeldung: 22.04.2015
(73) Patentinhaber: Rasspe Systemtechnik GmbH, 42929 Wermelskirchen (DE)
(72) Erfinder: SCHUMACHER, Friedrich Wilhelm, 57612 Birnbach (DE); SCHUMACHER, Heinrich Günter, 57612 Eichelhardt (DE); FLANHARDT, Michael, 40764 Langenfeld (DE); ACIMAS, Andreas, 42699 Solingen (DE)
(74) Vertreter: Neumann Müller Oberwalleney & Partner Patentanwälte
(86) Internationale Anmeldenummer: PCT/EP2012/061386
(87) Internationale Veröffentlichungsnummer: WO 2013/185832

(56) Entgegenhaltungen:
- EP-A1- 1 532 859
- DE-A1-102008 041 120
- DE-A1-102010 038 590
- DE-B3-102007 000 678
- DE-U1- 9 015 883

## Beschreibung

Die Erfindung betrifft einen Garnknoter mit einem Knoterrahmen, einer Zwischenwelle, die am Knoterrahmen um eine Drehachse drehbar gelagert ist und die einen Welleneingang zum Verbinden der Zwischenwelle mit einem Abtriebselement einer Knoterantriebswelle aufweist, sowie mindestens eine um eine Knoterhakenachse drehbar am Knoterrahmen gelagerte Knoterhakenwelle, die mit der Zwischenwelle antriebsverbunden ist und einen Knoterhaken zum Bilden eines Garnknotens trägt.

Garnknoter oder -knüpfer werden in vorwiegend mobilen Großrechteckpackenpressen für Stroh, Heu, Silage und ähnlichem Gut sowie in der Wertstoffverwendung, z.B. für die Bündelung von Papier, Textilien, dünnen Blechen und dergleichen eingesetzt. Mit solchen Garnknotern ausgerüstete Binde- oder Bündeleinrichtungen können aber auch Bestandteil von Verpackungsanlagen für die Umschnürung von Packen, Ballen oder Bündel aus hierfür geeigneten Materialien sein.

In stationären oder mobilen Großpackenpressen wird das Pressgut in einen im Querschnitt zumindest rechteckigen Presskanal, vorwiegend vorverdichtet, eingefüllt und zu einem rechteckigen Gutstrang gepresst. Dieser wird in quaderförmige Packen - gebräuchlich ist auch die Bezeichnung Vierkantballen - abgeteilt, deren Ober- und Unterseite sowie deren Außenseiten in Längsrichtung des Presskanals mit mehreren Garnsträngen umreift werden, die vor dem Ausstoß des Packens verknotet werden. Die Zuführung der notwendigen Garne, der Knotvorgang innerhalb des Garnknoters sowie die Mitwirkung der am Zustandekommen eines Doppelknotens beteiligten Pressenelemente sind für herkömmliche Doppelknoter in dem Dokument DE 27 59 976 C1 beschrieben.

Je nach Breite des Packens und dessen Pressdichte sind zwei oder mehrere Doppelknoten-Garnknoter auf der Knoter-Antriebswelle einer Presse nebeneinander montiert. Die Auswahl der Garnknoter und der den Knotvorgang unterstützenden Pressenelemente werden durch die Anzahl der erforderlichen Umreifung eines Packens bestimmt.

Die Knoter-Antriebswelle befindet sich entweder oberhalb oder unterhalb des zumeist zumindest annähernd waagerecht angeordneten Presskanals und in der Regel parallel zu diesem; bei anderen Presskanälen ist die Antriebswelle seitliche angeordnet.

Die Wirtschaftlichkeit z.B. der Halmfutterbergung hängt von den Berge-, Fracht- und Einlagerungskosten ab. Stroh, vor allem gehäckseltes Gut, wird als Einstreu in Geflügelställen, Milchvieh-Liegeboxen und sonstigen Ställen verwendet. Es dient ferner als Futtermittel in rohfaserschwachen Futterrationen, als Bodenbedeckung im Erdbeeranbau und als Nährboden für Pilzzuchten. Um solche Verwendungen zu ermöglichen, werden die Großpackenpressen frontseitig mit Schneidwerken oder Häckselvorrichtungen ausgerüstet. In der Regel erfolgt in dem dem Hauptpresskanal vorgelagerten Zuführkanal eine Vorverdichtung des Pressgutes, welches dem Hauptpresskanal erst dann zugeführt wird, wenn eine vorbestimmte Menge mit definierter Pressgutdichte zur Verfügung steht. Durch solche Vorkehrungen entstehen hochverdichtete Packen mit hohem Gewicht.

Da die mobilen Pressen nicht mehr nur von einem zum anderen Feld umgesetzt sondern auch überbetrieblich eingesetzt werden, müssen sie tauglich für Straßenfahrten sein, d.h., sie müssen der Straßenverkehrszulassungsordnung genügen. Daraus folgt, dass die Maschinenabmessungen nicht unbegrenzt vergrößert werden können. Auch die Abmessungen der einzelnen Packen müssen für eine optimale LKW-Verladung und spätere Lagerung geeignete Werte aufweisen.

Um das Packengewicht noch weiter zu erhöhen, wodurch die zur Verfügung stehenden Transportkapazitäten besser als bisher ausgenutzt werden können und der Zusammenhalt eines Packens gestärkt wird, wird eine Steigerung der Verdichtung eines Packens bei vergleichbaren Feuchtigkeitsgraden des Pressgutes angestrebt. Bei einer solchen Zielsetzung ist jedoch zu berücksichtigen, dass die zur Zeit zur Verfügung stehenden Kunststoff-Pressgarne, vorwiegend Polypropylengarne, eine begrenzte Reißfestigkeit aufweisen; sie würden bei gesteigerter Pressgutdichte reißen, wenn die Packen aus dem Presskanal gestoßen werden. Die Dicke des Pressengarns, die durch die Lauflänge des Garnstrangs bestimmt ist, die ausdrückt, wie viele Meter Garn ein Kilogramm wiegen (Maßeinheit: m/kg), kann nicht ohne weiteres erhöht werden, weil die einzelnen Knoterkomponenten einerseits auf die Verarbeitung der am Markt befindlichen Pressengarne abgestellt sind; andererseits würden dickere Garne mit gesteigerter Reißfestigkeit die Abmessungen der Garnknoter unvorteilhaft vergrößern, wobei es ungewiss ist, ob eine sichere Funktion der Garnknoter, insbesondere nach dem so genannten Deering-Arbeitsprinzip, überhaupt zu erzielen ist.

Zur Erhöhung des Gewichts eines Packens bei bleichem Feuchtigkeitsgrad des zu packenden Materials, ohne gleichzeitig die Abmessung zu erhöhen, wird in WO 2011/054360 A1 vorgeschlagen, die Anzahl an zu verknotender Garnsträngen zu erhöhen. So waren bisher sechs Garnknoter zum Knoten von sechs parallelen Garnsträngen üblich. Die Lösung gemäß WO 2011/054360 A1 schlägt acht Garnknoter vor. Hierbei werden Doppelknoten-Garnknoter jeweils mit einer auf der um ihre Achse angetriebenen Knoterantriebswelle drehfest befestigten Knoterantriebsscheibe und mit einem der Knoterantriebsscheibe zugeordneten Knoter-Chassis versehen. Das Knoter-Chassis ist einenends bezüglich des Pressenkanals und anderenends bezüglich der Knoterantriebswelle räumlich feststehend gehalten und trägt eine zwei Knoten aufeinanderfolgend bildende Knoterbaugruppe sowie einen von einer Kurvenbahn der Knoterantriebsscheibe angetriebenen Messerhebel. Die Knoterbaugruppen umfassen zumindest einen von einer ersten Antriebsverzahnung der Knoterantriebsscheibe angetriebenen Garnhalter und einen von einer zweiten Antriebsverzahnung der Knoterantriebsscheibe angetriebenen Knoterhaken. Der Messerhebel hat eine dreifache Funktion, indem er erstens der Garnführung, zweitens dem Durchtrennen des Garns und drittens dem Abstreifen der Garnschlingen vom Knoterhaken dient. Es wurde vorgesehen, dass die Knoterbaugruppe bezüglich der Nabe der Knoterantriebsscheibe und des antriebswellenseitigen Endes des Knoter-Chassis insgesamt axial versetzt angeordnet ist. Die jeweilige Knoterbaugruppe und ggf. auch der Schwenkbereich des Messerhebels überlappt in Achsrichtung der Knoterantriebswelle mit der Knoterantriebsscheibe des benachbarten Doppelknoten-Garnknoters auf einer Teillänge der Knoterbaugruppe und ggf. auch des Schwenkhebels des Messerbereichs. Auf diese Weise ergibt sich eine gewisse dimensionierungsmäßige Entkopplung zwischen den dimensionierungsmäßigen Erfordernissen der Nabe der Knoterantriebsscheibe und antriebswellenseitigen Befestigung des Knoter-Chassis von der Anordnung und Ausführung der Knoterbaugruppe und des Messerhebels. Nicht unerhebliche Längenabschnitte des rechten und/oder linken benachbarten Doppelknoten-Garnknoters überlappen also mit dem dazwischen liegenden Doppelknoten-Garnknoter. Auf diese Weise wird die wirksame Länge eines Doppelknoten-Garnknoters bezüglich der Knoterantriebswelle soweit verkürzbar, wie es durch die Antriebsbaugruppe oder die Knoterbaugruppe oder den Messerhebel gestattet ist, wobei die wirksame Länge des Doppelknoten-Garnknoters bestimmt wird durch diejenige der drei Baugruppen, die bezüglich der Knoter-Antriebswelle die größte Länge aufweist.
Allen vorangenannten Garnknotern ist gemeinsam, dass die Knoterantriebsscheiben, die Bestandteil des Garnknoter sind, auf der Knoterantriebswelle aufgereiht sind. Wenn bei einem Defekt einer der Garnknoter demontiert bzw. ausgewechselt werden muss, müssen alle Knoterantriebsscheiben und damit die gesamten Garnknoter, die zwischen der auszuwechselnden Knoterantriebsscheibe und dem Ende der Knoterantriebswelle angeordnet sind, ebenfalls von der Knoterantriebswelle demontiert werden.

DE 90 15 883 U1 offenbart einen Garnknoter nach dem Oberbegriff des Anspruch 1. Die vorliegende Erfindung hat sich zur Aufgabe gestellt, eine Anordnung zu schaffen, bei der die Montage und Demontage der einzelnen Garnknoter auf einer Presseinrichtung weniger aufwendig ist.
Die Aufgabe wird durch einen Garnknoter gemäß dem Anspruch 1 gelöst. Vorteilhafte Ausführungsformen ergeben sich aus den abhängigen Ansprüchen.
Demnach ist der Garnknoter als eigenständige Baueinheit ausgebildet, wobei der Garnknoter über den Welleneingang der Zwischenwelle lösbar mit der Knoterantriebswelle antriebsverbindbar ist. Somit kann jeder einzelne Garnknoter separat von der Knoterantriebswelle demontiert werden, ohne dass hierfür weitere Garnknoter ebenfalls demontiert werden müssen.

Die Knoterhakenachse der mindestens einen Knoterhakenwelle und die Längsachse der Zwischenwelle sind hierbei vorzugsweise derart angeordnet, dass diese sich schneiden oder mit Abstand kreuzen. Da die Knoterantriebswelle in der Regel quer über dem Presskanal z. B. einer Großballenpresse angeordnet ist, kann die Zwischenwelle in Richtung des Presskanals angeordnet werden, so dass in Richtung quer zum Pressenkanal bzw. entlang der Knoterantriebswelle ein möglichst geringer Baurahmen für den Garnknoter erforderlich ist. Damit ist ein Garnstrangabstand realisierbar, der geringer ist als bei herkömmlichen Doppelknotern. Somit können eine Vielzahl von Garnknotern, z.B. acht Garnknoter, nebeneinander angeordnet werden.

Der Garnknoter kann als Doppelknoter ausgebildet sein, der zwei Knoten gleichzeitig knüpft. Hierzu weist der Garnknoter zwei Knoterhakenwellen auf, die jeweils um eine Knoterhakenachse drehbar am Knoterrahmen gelagert sind und die jeweils mit der Zwischenwelle antriebsverbunden sind. Hierbei können die Knoterhakenachsen der beiden Knoterhakenwellen parallel zueinander angeordnet sein.

Eine Antriebsverbindung zwischen jeweils einer Knoterhakenwelle und der Zwischenwelle kann über jeweils eine Zahnradverbindung hergestellt werden, wobei es sich hierbei vorzugsweise um eine Kegelradverbindung handelt. Jede Zahnradverbindung weist ein erstes Zahnrad auf, welches drehfest auf der Zwischenwelle sitzt und eine umlaufende unterbrechungsfreie Verzahnung aufweist. Mit dem ersten Zahnrad kämmt ein zweites Zahnrad der mindestens einen Knoterhakenwelle.

Der Garnknoter kann einen Reservehalter zur vorübergehenden Bildung einer Garnreserve aufweisen, der von der Zwischenwelle angetrieben ist und der an dem Knoterrahmen verstellbar gehalten ist.

Der Garnknoter weist vorzugsweise je Knoterhakenwelle einen Garnriegel zum Andrücken von Garnsträngen an den Knoterhaken der jeweiligen Knoterhakenwelle auf, wobei der bzw. die Garnriegel von der Zwischenwelle angetrieben sind und diese an dem Knoterrahmen verstellbar gehalten sind. Üblicherweise werden Garnriegel an einem Rahmen der Großpackenpresse separat vom Garnknoter vorgesehen. Hierbei ist die Synchronisierung mit dem Garnknoter schwierig, was durch eine integrierte Anordnung des Garnknoters am Knoterrahmen erleichtert wird, wobei der Garnriegel zudem von der Zwischenwelle des Garnknoters angetrieben wird, was zu einer weiteren Vereinfachung der Synchronisierung führt.

Der Garnknoter kann eine Umlenkvorrichtung aufweisen, welche zum Umlenken von Garnsträngen vorgesehen ist. Die Umlenkvorrichtung ist ebenfalls an dem Knoterrahmen verstellbar gehalten und wird von der Zwischenwelle angetrieben. Dies ist insbesondere dann von Vorteil, wenn der Garnknoter ohne Abziehhebel zum Abziehen der Knoter von den Knoterhaken ausgebildet ist. In diesem Fall werden die Knoten durch den Pressendruck auf die Ballen im Presskanal von dem Knoterhaken abgezogen, wobei jedoch eine Umlenkung der Garnstränge erfolgen muss, wozu die Umlenkvorrichtung dient.

Zum Antreiben und Steuern zumindest einer der Vorrichtungen aus der Gruppe Reservehalter, Garnriegel und Umlenkvorrichtung kann eine Steuerkurve auf der Zwischenwelle vorgesehen sein. Hierbei kann die jeweilige Vorrichtung einen Hebel aufweisen, der um eine parallel zur Längsachse angeordnete Schwenkachse am Knoterrahmen schwenkbar ist und mit einem Steuerelement, z. B. in Form einer Rolle, gegen die jeweilige Steuerkurve der Zwischenwelle mit Kraft beaufschlagt ist. Zwischen dem Hebel und der jeweiligen Vorrichtung kann eine Koppelstange gelenkig angeordnet sein.

Es kann eine Antriebsanordnung mit einer Knoterantriebswelle und mehreren vorgenannten Garnknotern vorgesehen sein, wobei auf der Knoterantriebswelle je Garnknoter ein Winkelgetriebe mit einem Abtriebselement angeordnet ist und wobei das Abtriebselement mit dem Welleneingang des jeweiligen Garnknoters verbunden ist.

Der vorangehend beschriebene Garnknoter wird vorzugsweise nach folgendem Verfahren betrieben:
Positionieren eines oberen Garnstrangs und eines unteren Garnstrangs in einen Arbeitsbereich eines ersten Knoterhakens und eines zweiten Knoterhakens des Garnknoters, wobei sich die Knoterhaken jeweils in einer Ausgangsstellung befinden,
Drehen der Knoterhaken von der Ausgangsstellung in eine Auflagestellung, in der der obere Garnstrang und der untere Garnstrang auf die Knoterhaken zu liegen kommen,
anschließendes Drehen der Knoterhaken um eine Umdrehung zur Bildung jeweils einer Schlaufe aus beiden Garnsträngen,
anschließendes Trennen der Garnstränge zwischen den Knoterhaken und abschließendes Drehen die Knoterhaken weiter bis zur Ausgangsstellung.

Hierbei ist vorgesehen, dass die Knoterhaken je Knotervorgang um zwei volle Umdrehungen gedreht werden.

Vorzugsweise wird zumindest einer der Garnstränge mittels einer Garnnadel entlang einer Garnzuführrichtung in den Arbeitsbereich der Knoterhaken gebracht. In Ausgangsstellung der Knoterhaken werden die gebildeten Schlaufen entgegen der Garnzuführrichtung vom ersten Knoterhaken und in Garnzuführrichtung vom zweiten Knoterhaken durch Fortbewegung von Pressgut in einem Presskanal abgezogen.

Beim Drehen der Knoterhaken zum Ausbilden von Schlaufen wird je Knoterhaken ein Garnriegel betätigt, der den oberen Garnstrang und den unteren Garnstrang über ein Hakenteil des Knoterhakens hält. Mit dem Betätigen der Garnriegel wird eine Umlenkrolle einer Umlenkvorrichtung derart betätigt, dass der obere Garnstrang und der untere Garnstrang vom zweiten Knoterhaken in Garnzuführrichtung zur Umlenkrolle und von dieser entgegen der Garnzuführrichtung bis zum Presskanal geführt werden.

Bei der Bildung von Knoten mit durchgezogenen Knotenenden bzw. Garnenden entsteht ein üblicherweise drei bis fünf Zentimeter langes Garnstück, das sogenannte Abfallende, das abgetrennt wird. Je nach Einsatzort der Presse sind diese Garnreste unerwünscht. Z.B. können Tierfelle durch abfärbende Garnreste in Verbindung mit Wasser oder tierischen Ausscheidungen verfärbt werden.

Um dies zu vermeiden, werden vorliegend vorzugsweise Schlaufenknoten gebildet, bei denen die Knotenenden in den Knoten eingebunden sind, also nicht vollständig durchgezogen sind. Hierbei entstehen diese Garnreste nicht. Außerdem ist die Festigkeit der Schlaufenknoten höher als diejenige der Knoten mit durchgezogenen Knotenenden. Da die Knotenfestigkeit die Festigkeit der Packenumreifung bestimmt, wird auch die Auswahl geeigneter Pressengarne durch den Einsatz von Doppelschlaufenknotern nicht unwesentlich beeinflusst.

Bevorzugte Ausführungsbeispiele werden im folgenden anhand der Zeichnungen näher erläutert. Hierin zeigen
- Figur 1: einen Garnknoter in perspektivischer Ansicht;
- Figuren 2-8: den Garnknoter gemäß Figur 1 in perspektivischen Darstellungen und in unterschiedlichen Stellungen der einzelnen Bauteile zur Verdeutlichung eines Bindevorgangs;
- Figuren 9-16: eine Bindeeinrichtung mit einem Garnknoter gemäß Figur 1 in Seitenansicht zur Verdeutlichung des Bindevorgangs unter Verwendung einer Bindenadel mit zwei Rollen;
- Figuren 17-24: eine Bindeeinrichtung mit einem Garnknoter gemäß Figur 1 in Seitenansicht zur Verdeutlichung des Bindevorgangs unter Verwendung einer spitzen Bindenadel mit einer Rolle.

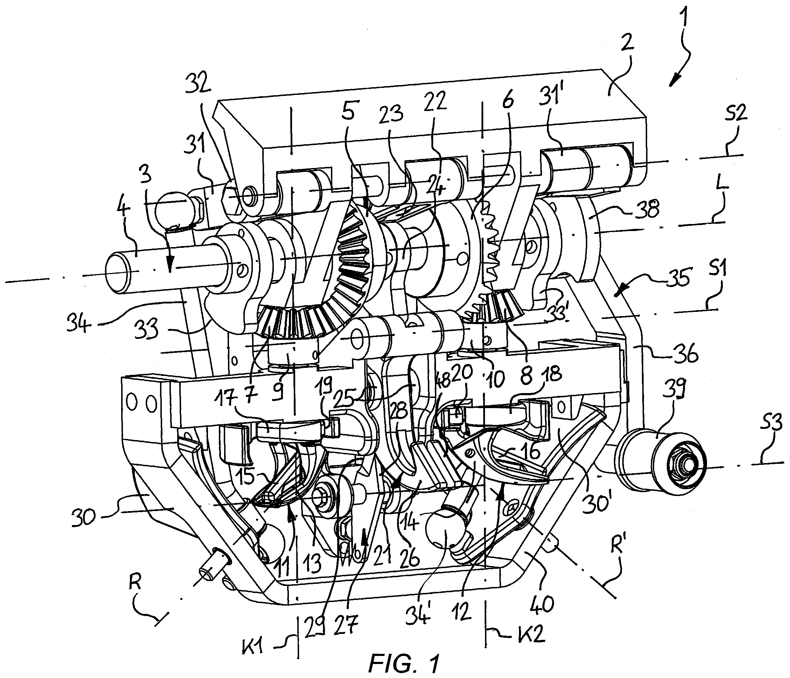

Figur 1 zeigt einen erfindungsgemäßen Garnknoter 1, der einen Knoterrahmen 2 aufweist, an dem alle Funktionsbauteile des Garnknoters befestigt sind, so dass dieser eine eigenständige Baueinheit bildet. An dem Knoterrahmen 2 ist eine Zwischenwelle 3 um eine Längsachse L drehbar gelagert. Die Zwischenwelle 3 weist einen Welleneingang 4 auf, mit dem die Zwischenwelle 3 an einem Abtriebselement einer Knoterantriebswelle antriebsverbunden werden kann. Im vorliegenden Fall ist der Welleneingang 4 als Wellenzapfen gestaltet, der mit einem später erläuterten Abtriebselement eines Winkelgetriebes mit der Knoterantriebswelle verbindbar ist. Auf der Zwischenwelle 3 sind ein erstes Antriebskegelrad 5 und ein zweites Antriebskegelrad 6 drehfest befestigt. Die beiden Antriebskegelräder 5, 6 sind zu einer Symmetrieebene, die senkrecht zur Längsachse L angeordnet ist, spiegelbildlich angeordnet und ausgebildet. Dies bedeutet, dass die Verzahnungen der beiden Antriebskegelräder 5, 6 voneinander weg weisen. Grundsätzlich könnten sie auch einander zugewandt sein. Die Verzahnungen der Antriebskegelräder 5, 6 verlaufen unterbrechungsfrei um den Umfang. Das erste Antriebskegelrad 5 ist in Verzahnungseingriff zu einem ersten Abtriebskegelrad 7, welches fest auf einer ersten Knoterhakenwelle 9 sitzt. Das zweite Antriebskegelrad 6 ist in Verzahnungseingriff mit einem zweiten Abtriebskegelrad 8, welches drehfest auf einer zweiten Knoterhakenwelle 10 sitzt. Die erste Knoterhakenwelle 9 ist um eine erste Knoterhakenachse K1 drehbar am Knoterrahmen 2 gelagert. Die zweite Knoterhakenwelle 10 ist um eine zweite Knoterhakenachse K2 am Knoterrahmen 2 drehbar gelagert. Die beiden Knoterhakenachsen K1, K2 sind parallel zueinander ausgerichtet und schneiden die Längsachse L in einem rechten Winkel. Denkbar sind auch andere Anordnungen, bei denen die Knoterhakenachsen K1, K2 die Längsachse mit Abstand kreuzen und gegebenenfalls nicht im rechten Winkel zur Längsachse L angeordnet sind. Die Knoterhakenachsen K1, K2 müssen auch nicht zwingend parallel zueinander angeordnet sein.

Die erste Knoterhakenwelle 9 weist zur Bildung eines Knotens in einem Garnstrang an ihrem Ende einen ersten Knoterhaken 11 auf. Dieser umfasst ein erstes Hakenteil 13, welches seitlich von der ersten Knoterhakenwelle 9 vorsteht. Hierzu ist in allgemein bekannter Form eine erste Knoterzunge 15, ebenfalls seitlich vorstehend, verstellbar angeordnet, um einen Garnstrang zwischen dem ersten Hakenteil 13 und der ersten Knoterzunge 15 einzuklemmen. Die zweite Knoterhakenwelle 10 trägt an ihrem Ende identisch zur ersten Knoterhakenwelle 9 einen zweiten Knoterhaken 12, mit einem seitlich vorstehenden zweiten Hakenteil 14 und einer hierzu beweglichen zweiten Knoterzunge 16. Die beiden Knoterhaken 11, 12 können identisch ausgebildet sein oder, vorzugsweise, spiegelsymmetrisch zu der Symmetrieebene, die senkrecht zur Längsachse L angeordnet ist. Zum Antreiben der beiden Knoterzungen 15, 16 ist eine erste Knoterhakensteuerkurve 17 vorgesehen, welche ortsfest zum Knoterrahmen 2 angeordnet ist und eine Außenumfangsfläche aufweist, die um die erste Knoterhakenachse K1 verläuft. Gegen die erste Knoterhakensteuerkurve 17 ist die erste Knoterzunge 15 mit einer ersten Knoterzungenrolle 19 radial abgestützt und gegen diese federbeaufschlagt. Die erste Knoterhakensteuerkurve 17 weist einen Verlauf um die erste Knoterhakenachse K1 auf, welche von einer Kreisbahn abweicht, so dass bei einem Drehen der ersten Knoterhakenwelle 9 somit über die Hebelwirkung in bekannter Weise die erste Knoterzunge 15 gegenüber dem ersten Hakenteil 13 geöffnet und geschlossen wird. Analog hierzu ist zum Steuern der zweiten Knoterzunge 16 eine zweite Knoterhakensteuerkurve 18 vorgesehen, gegen welche sich die zweite Knoterzunge 16 mit einer zweiten Knoterzungenrolle 20 abstützt. Die beiden Knoterhakensteuerkurven 17, 18 sind hierbei ebenfalls spiegelsymmetrisch zu der Symmetrieebene, welche senkrecht zur Längsachse L angeordnet ist, ausgebildet.

Durch die spiegelsymmetrische Anordnung der beiden Antriebskegelräder 5, 6 werden die beiden Knoterhakenwellen 9, 10 gegensinnlich zueinander angetrieben. Da die beiden Knoterhakensteuerkurven 17, 18 ebenfalls spiegelsymmetrisch ausgebildet sind, öffnen die beiden Knoterhaken 11, 12 zum gleichen Zeitpunkt.

Zwischen den beiden Knoterhakenwellen 9, 10 ist ein Reservehalter 21 angeordnet, der in Form eines Hebelarms ausgebildet ist und um eine erste Schwenkachse S1 schwenkbar am Knoterrahmen 2 gelagert ist. Die erste Schwenkachse S1 ist parallel zur Längsachse L angeordnet. Für den Antrieb des Reservehalters 21 ist ein Hebel 22 vorgesehen, der um eine zweite Schwenkachse S2 schwenkbar am Knoterrahmen 2 gelagert ist, wobei die zweite Schwenkachse S2 parallel zur Längsachse L angeordnet ist. Der Hebel 22 stützt sich über ein Steuerelement in Form einer Rolle 23 gegen eine Steuerkurve 24 ab, wobei die Steuerkurve 24 um die Längsachse L verläuft und mit der Zwischenwelle 3 umläuft. Die Steuerkurve 24 weist einen von einer Kreisbahn abweichenden Verlauf auf, so dass gemäß Figur 1 der Hebel 22 angehoben und abgesenkt werden kann. An dem Hebel 22 ist eine Koppelstange 25 schwenkbar befestigt, welche andererseits schwenkbar am Reservehalter 21 befestigt ist, so dass die Bewegung des Hebels 22 eine Bewegung des Reservehalters 21 bewirkt.

An einem unteren Ende weist der Reservehalter 21 einen Hakenabschnitt 26 auf, mit dem ein Garnstrang erfasst und in der in Figur 1 dargestellten Orientierung des Garnknoters 1 nach hinten gezogen werden kann, um eine Garnreserve zur Bildung von Garnknoten zu bilden. Der Hakenabschnitt 26 ist mittig in einer Ebene, die senkrecht zur ersten Schwenkachse S1 angeordnet ist, geschlitzt. Beim Zurückschwenken des Reservehalters 21 überstreift der Hakenabschnitt 26 ein klappbares Messer 27. Das Messer 27 ist um eine dritte Schwenkachse S3 schwenkbar am Knoterrahmen 2 befestigt, wobei die dritte Schwenkachse S3 parallel zur Längsachse L angeordnet ist. Beim Zurückbewegen des Reservehalters 21 aus den in Figur 1 dargestellten Ausgangspositionen stößt ein Garnstrang, der vom Reservehalter 21 nach hinten gezogen wird, gegen einen Messerrücken 28 des Messers 27, wobei der Messerrücken 28 einer Schneide 29 des Messers abgewandt ist. Hierbei wird das Messer 27 aus der in Figur 1 dargestellten Ausgangsposition in eine zurück geklappte Position verstellt, bis der Garnstrang das Messer 27 passiert hat. Hiernach wird das Messer 27 federbelastet in die in Figur 1 dargestellte Ausgangsposition zurückgeschwenkt. Beim Zurückbewegen des Reservehalters 21 in seine Ausgangsposition stößt der Garnstrang gegen die Schneide 29 des Messers 27 und wird durchtrennt.

An dem Knoterrahmen 2 sind zudem zwei Garnriegel 30, 30' vorgesehen, wobei im folgenden der Garnriegel 30 für den ersten Knoterhaken 11 exemplarisch erläutert wird. Der Garnriegel 30' für den zweiten Knoterhaken 12 ist entsprechend aufgebaut. Der Garnriegel 30 ist um eine Riegelachse R schwenkbar am Knoterrahmen 2 befestigt. Die Riegelachse R ist hierbei winklig zur ersten Knoterhakenachse K1 angeordnet, wobei im vorliegenden Fall der Winkel von einem rechten Winkel abweicht. Der Garnriegel 30 dient, wie bei Garnknotern zum Stand der Technik, dazu, einen Garnstrang an den ersten Knoterhaken 11 anzudrücken, um einen Knoten bilden zu können. Hierbei wird der Garnriegel 30 im Verlauf der Knotenbildung gegen den Garnstrang geschwenkt. Zum Antreiben des Garnriegels 30 ist ein weiterer Hebel 31 vorgesehen, der um die zweite Schwenkachse S2 schwenkbar am Knoterrahmen 2 gelagert ist. Der Hebel 31 stützt sich über ein Steuerelement in Form einer Rolle 32 gegen eine Steuerkurve 33 ab, wobei die Steuerkurve 33 an der Zwischenwelle 3 drehfest angeordnet ist und einen Verlauf aufweist, der von einer Kreisbahn abweicht, so dass der Hebel 31 bei einer Drehung der Zwischenwelle 3 bewegt wird. An dem Hebel 31 ist eine Koppelstange 34 schwenkbar befestigt, die andererseits schwenkbar am Garnriegel 30 befestigt ist, so dass die Bewegung des Hebels 31 auf den Garnriegel 30 übertragen wird.

Ferner ist eine Umlenkvorrichtung 35 vorgesehen. Diese umfasst einen Schwenkarm 36, welcher um die zweite Schwenkachse S2 schwenkbar am Knoterrahmen 3 befestigt ist. Der Schwenkarm 36 stützt sich über ein Steuerelement in Form einer Rolle 37 gegen eine Steuerkurve 38 der Zwischenwelle 3 ab. Die Steuerkurve 38 weist ebenfalls einen Verlauf auf, der von einer Kreisbahn abweicht, so dass durch Drehen der Zwischenwelle 3 der Schwenkarm 36 um die zweite Schwenkachse S2 geschwenkt wird. An einem nach vorne gerichteten Abschnitt des Schwenkarms 36 ist eine Umlenkrolle 39 drehbar gelagert, mit deren Hilfe ein Garnstrang, wie noch später erläutert wird, umgelenkt werden kann und durch die schwenkbare Anordnung des Schwenkarms 36 kann die Umlenkrolle 39 in den Bereich eines Garnstrangs eingeschwenkt werden bzw. aus diesem Bereich herausgeschwenkt werden.

Nach unten weist der Garnknoter 1 einen Bügel 40 auf, der Teil des Knoterrahmens 2 ist. An dem Bügel 40 sind die Garnriegel 30, 30' schwenkbar befestigt. Der Bügel 40 dient auch als Befestigungselement des gesamten Garnknoters 1 auf einer Presse und hat auch die Funktion eines Schutzbügels für die Knoterhaken 11, 12.

Der Garnknoter 1 ist somit mit seinem Knoterrahmen 2 als eigenständige Baueinheit ausgebildet, wobei alle Funktionsbauteile des Garnknoters 1 an dem Knoterrahmen 2 befestigt bzw. gelagert sind. Insbesondere die Lagerung der Garnriegel 30, 30' an dem Knoterrahmen 2 stellen eine Konstruktion dar, die die Synchronisation der Garnriegel 30, 30' an den Knoterablauf besonders einfach gestalten. Der gesamte Garnknoter 1 lässt sich über den Knoterrahmen 2 an einer Presse befestigen, wobei der Welleneingang 4 der Zwischenwelle 3 mit einer Knoterantriebswelle einer Presse verbunden werden kann. Auf der Knoterantriebswelle der Presse selbst und auch an der Presse bzw. dessen Rahmen sind keine weiteren Funktionsbauteile des Garnknoters mehr vorhanden, so dass bei einem Defekt der gesamte Garnknoter 1 als Baueinheit demontiert werden kann, ohne dass hiervon weitere vorhandene Garnknoter an derselben Presse bzw. Garnknoter, die durch dieselbe Knoterantriebswelle angetrieben werden, beeinflusst werden. Eine weitere Demontage der anderen Garnknoter ist nicht erforderlich.

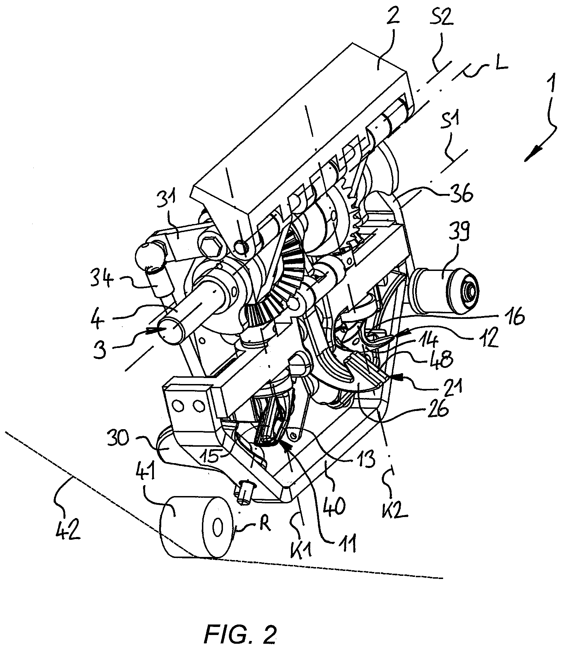

Im folgenden wird anhand der Figuren 2 bis 8 der generelle Ablauf des Bindens zweier Knoten beschrieben, wobei zur Vereinfachung nur der Garnknoter mit den Garnsträngen dargestellt ist. Die weiteren Bauteile sind zur Vereinfachung zunächst nicht dargestellt.

Generell ist der in den Figuren 2 bis 8 dargestellte Garnknoter 1, der dem Garnknoter gemäß Figur 1 entspricht, auf einer Presse, z.B. einer Ballenpresse aus dem landwirtschaftlichen Bereich, angeordnet, wie dies z.B. auch in der WO 2011/054360 A1 dargestellt ist. Der Garnknoter 1 ist derart ausgerichtet, dass die Längsachse L in Fahrtrichtung (F) ausgerichtet ist, wobei eine Garnumlenkrolle 41 in Fahrtrichtung betrachtet vor dem Garnknoter angeordnet ist.

Vor dem Binden von Knoten stehen die Knoterhaken 11, 12 in einer in Figur 2 dargestellten Ausgangsstellung. Die Knoterzungen 15, 16 sind in einer geschlossenen Position. Die Knoterhaken 11, 12 zeigen, bezogen auf die bereits oben erwähnte Symmetrieebene, welche senkrecht zur Längsachse L angeordnet ist, nach außen voneinander weg, d.h. der erste Knoterhaken 11 weist in Richtung zur Garnumlenkrolle 41 und der zweite Knoterhaken 12 in Richtung zur Umlenkrolle 39. Die Umlenkrolle 39 ist mittels des Schwenkarms 36 in eine vordere Position in den Bereich der Garnstrangführung geschwenkt. Ebenso ist der Reservehalter 21 in eine vordere Position geschwenkt, in der sich der Hakenabschnitt 26 des Reservehalters 21 ebenfalls im Führungsbereich der Garnstränge befindet. In diesem Zusammenhang bedeutet "nach vorne" geschwenkt, dass sich die Bauteile, d.h. die Umlenkrolle 39 und der Hakenabschnitt 26 des Reservehalters 21 zur rechten Seite in der Darstellung gemäß Figur 2 geschwenkt sind.

Ein oberer Garnstrang 42 ist, in der Darstellung gemäß Figur 2, von einer nicht dargestellten Garnrolle über bekannte ebenfalls nicht dargestellte Spann- und Bremsvorrichtungen von links oben kommend um die Garnumlenkrolle nach unten rechts zu einer Oberseite eines Ballens geführt.

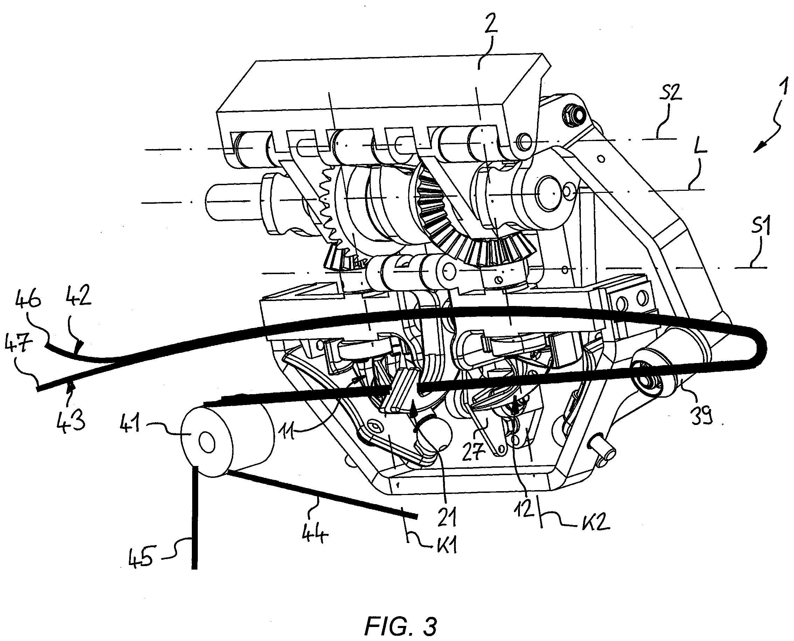

In einem ersten Verfahrensschritt wird nach dem Auslösen des Bindevorgangs eine Bindenadel, wie später noch dargestellt, in Bewegung gesetzt, die einen unteren Garnstrang 43 nach oben bewegt. Der untere Garnstrang 43 verläuft von einer unteren Garnrolle über nicht dargestellte bekannte Spann- und Bremsvorrichtungen zu einer Unterseite des Ballens. Bei der Aufwärtsbewegung der Bindenadel ergreift diese den oberen Garnstrang 42 und überführt beide Garnstränge 42, 43 zusammen in den Knoterbereich. Die Bindenadel bewegt sich in diesem Bereich entgegen der Fahrtrichtung und passiert zunächst die Garnumlenkrolle 41, dann den ersten Knoterhaken 11, dann den Hakenabschnitt 26 des Reservehalters 21, dann den zweiten Knoterhaken 12 und zum Schluss die Umlenkrolle 39. Hiernach liegen beide Garnstränge 42, 43 mit ihren zum Ballen führenden Enden 44, 45 um die Garnumlenkrolle 41 und liegen auf den Knoterzungen 15, 16 der Knoterhaken 11, 12 sowie auf dem Hakenabschnitt 26 des Reservehalters 21 auf. Die Garnriegel 30, 30' befinden sich noch in ihrer Ausgangsstellung außerhalb des Führungsbereichs der Garnstränge 42, 43. Die Umlenkrolle 39 wurde mittels des Schwenkarms 36 aus dem Führungsbereich der Garnstränge 42, 43 nach hinten weggeschwenkt, so dass die Garnstränge 42, 43 nicht auf der Umlenkrolle 39 liegen. Die Knoterhakenwellen 9, 10 wurden gedreht bis zu einer Position, in der die Knoterhaken 11, 12 einander zugewandt sind und in den Führungsbereich der Garnstränge 42, 43 hineinragen. Hierbei wurde der erste Knoterhaken 11 von oben betrachtet im Uhrzeigersinn gedreht und der zweite Knoterhaken 12 von oben betrachtet entgegen dem Uhrzeigersinn gedreht (Figur 3).

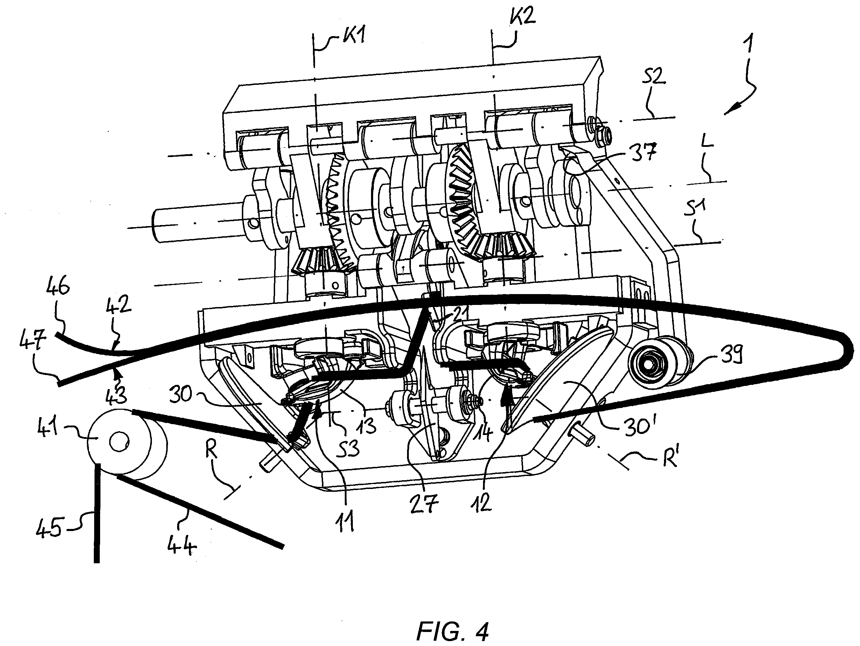

Figur 4 zeigt den Garnknoter 1, wenn die Bindenadel annähernd ihre oberste Position erreicht hat. Die Garnriegel 30, 30' sind in den Führungsbereich der Garnstränge 42, 43 hineingeschwenkt und drücken die Garnstränge nach unten, so dass sie auf den Knoterhaken 11, 12 gehalten sind. Hierbei werden die Garnstränge 42, 43 außerhalb des Schwenkbereichs der Hakenteile 13, 14 der Knoterhaken 11, 12 nach unten gedrückt, um ein sicheres Eingreifen der Garnstränge 42, 43 durch die Knoterhaken 11, 12 bei der weiteren Drehung derselben zu gewährleisten. Ferner ist der Reservehalter 21 nach hinten in eine zurückgezogene Position geschwenkt und hat eine Garnreserve zwischen den beiden Knoterhaken 11, 12 gezogen. Die am Reservehalter 21 gehaltenen Garnstränge 42, 43 wurden dabei über das gegen die Federkraft ausweichende Messer 27, wie oben beschrieben, gezogen. In den zwischen dem Garnriegel 30' am zweiten Knoterhaken 12 und der Bindenadelspitze aufgespannten Freiraum wird die Umlenkrolle 39 in eine vordere Position hineingeschwenkt, bis die Position gemäß Figur 4 erreicht ist. Darüber hinaus wurden die Knoterhaken 11, 12 weiter, im selben Drehsinn wie oben beschrieben, gedreht und befinden sich annähernd wieder in der Ausgangsstellung.

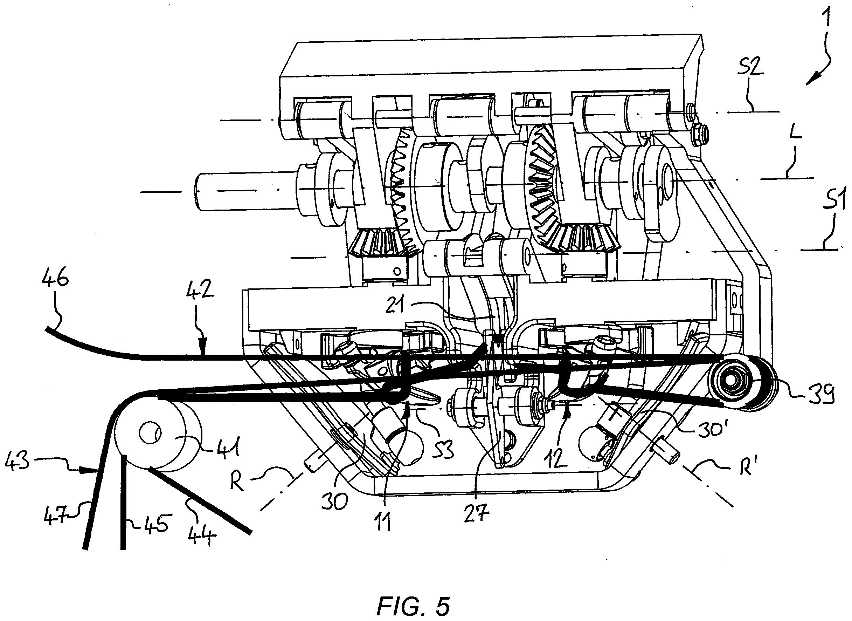

In Figur 5 ist die Bindenadel wieder aus dem Knoterbereich herausgeschwenkt. Dabei wurden die zu den Garnrollen führenden Enden 46, 47 der Garnstränge 42, 43 oben auf die Umlenkrolle 39 abgelegt. Der untere Garnstrang 43 ist nun zudem um die Garnumlenkrolle 41 umgelenkt. Die zum Ballen führenden Enden 44, 45 der beiden Garnstränge 42, 43 verlaufen von der Garnumlenkrolle 41 vorbei am wieder in seiner Ausgangsstellung befindlichen Garnriegel 30 zum ersten Knoterhaken 11 und von da aus zum Reservehalter 21 weiter zum zweiten Knoterhaken 12 und von dort zur Umlenkrolle 39.

Die Knoterhaken 11, 12 haben die Garnstränge 42, 43 um sich gewickelt und greifen mit den nun geöffneten Knoterzungen 15, 16 über die jeweils zum Reservehalter 21 laufenden Enden. Der Reservehalter 21 bewegt sich hierbei kontinuierlich entsprechend der Drehung der Knoterhaken 11, 12 zurück in die vordere Position und gibt somit sukzessive Garnreserve frei, die die Knoterhaken 11, 12 benötigen, um die Garnstränge 42, 43 aufzuwickeln.

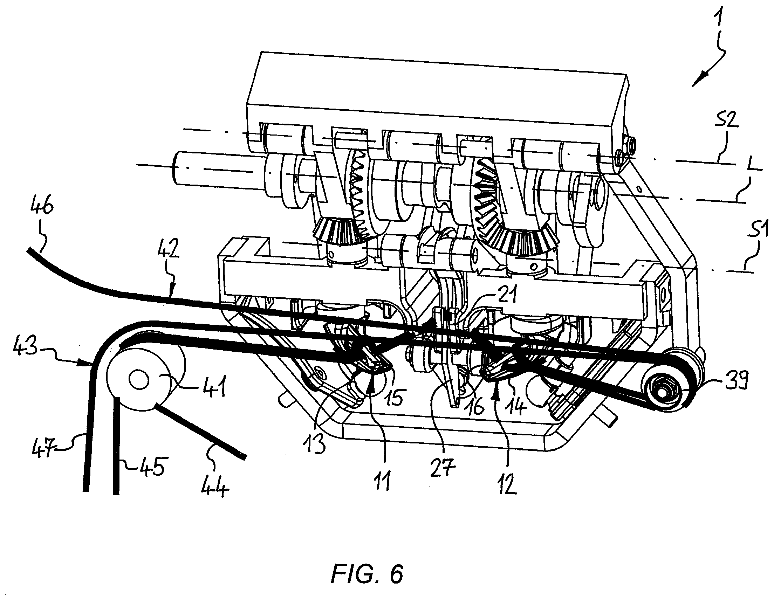

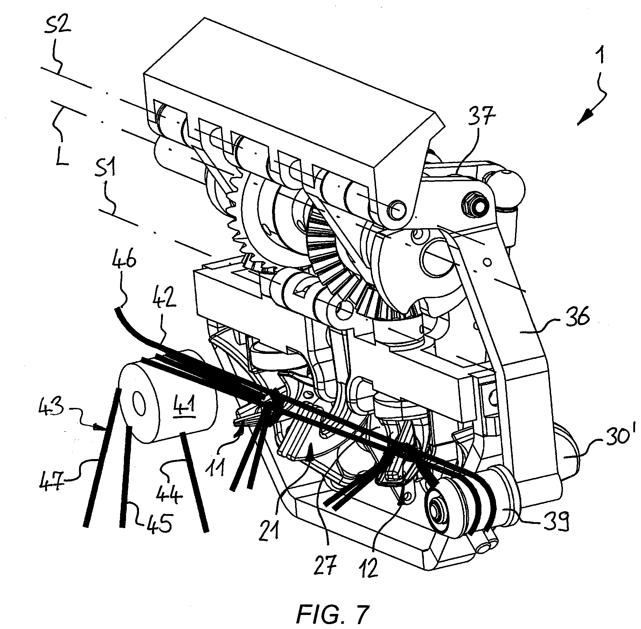

Im nächsten Schritt (Figur 6) sind die Knoterhaken 11, 12 weiter gedreht, wobei die Knoterzungen 15, 16 in ihre geschlossene Position überführt wurden. Die Garnstränge 42, 43 sind nun jeweils zwischen den Knoterzungen 15, 16 und den Hakenteilen 13, 14 eingeklemmt. Der Reservehalter 21 ist noch weiter nach vorne geschwenkt, um mehr Garnreserve freizugeben, und hat die Garnstränge 42, 43 vor die Schneide 29 des Messers 27 bewegt. Bei der weiteren Drehung der Knoterhaken 11, 12 wird auch der Reservehalter 21 weiter nach vorne geschwenkt. Dabei werden die Garnstränge 42, 43 mittels des Messers 27 durchtrennt (Figur 7).

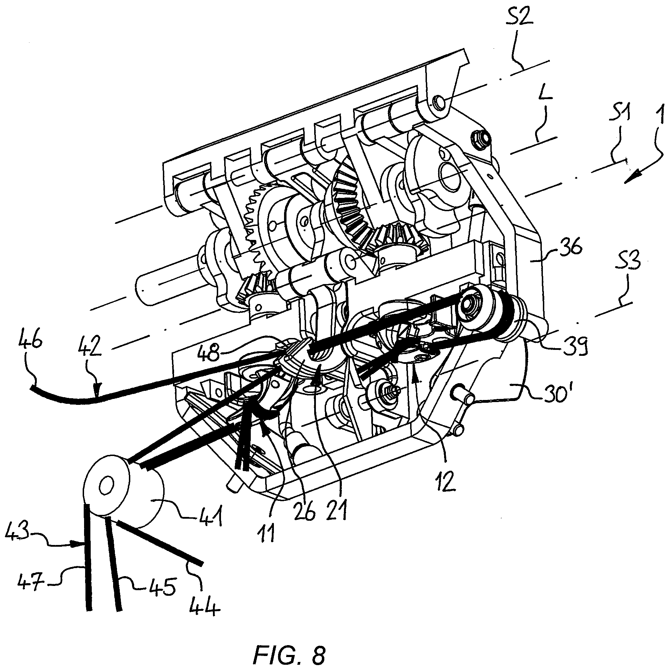

Die Knoterhaken 11, 12 werden dann weiter gedreht, bis diese wieder ihre Ausgangsstellung erreicht haben (Figur 8). In dieser Stellung hat auch der Reservehalter 21 wieder seine vordere Ausgangsposition erreicht. Der Reservehalter 21 übernimmt bei einem Schwenken in die vordere Position die zu den Garnrollen führenden Enden 46, 47 der beiden Garnstränge 42, 43, die im in Figur 8 rechten Knoterbereich über die Umlenkrolle 39 zum zweiten Knoterhaken 12 verlaufen. Die Garnstränge 42, 43 werden über vordere Schrägen 48 am Hakenabschnitt 26 des Reservehalters 21 bei der Vorwärtsbewegung desselben angehoben, bis diese in den Hakenabschnitt 26 springen.

Die Drehung der Knoterhaken 11, 12 ist somit abgeschlossen. Im weiteren Verlauf des Pressens der Ballen werden die fertigen Ballen und die Startkante des neuen Ballens weiter durch den Presskanal unterhalb des Garnknoters 1 geschoben. Daraus resultiert eine Kraft auf die Garnstränge 42, 43. Durch diese Kräfte in den Garnsträngen 42, 43 wird der Knoten vom ersten Knoterhaken 11 abgezogen und geformt. Ebenso geschieht dies am zweiten Knoterhaken 12, wobei hier die Garnstränge 42, 43 um die Umlenkrolle 39 umgelenkt sind, so dass der Knoten vom zweiten Knoterhaken 12 abgezogen werden kann, auch wenn dieser in die entgegengesetzte Richtung des ersten Knoterhakens 11 ausgerichtet ist.

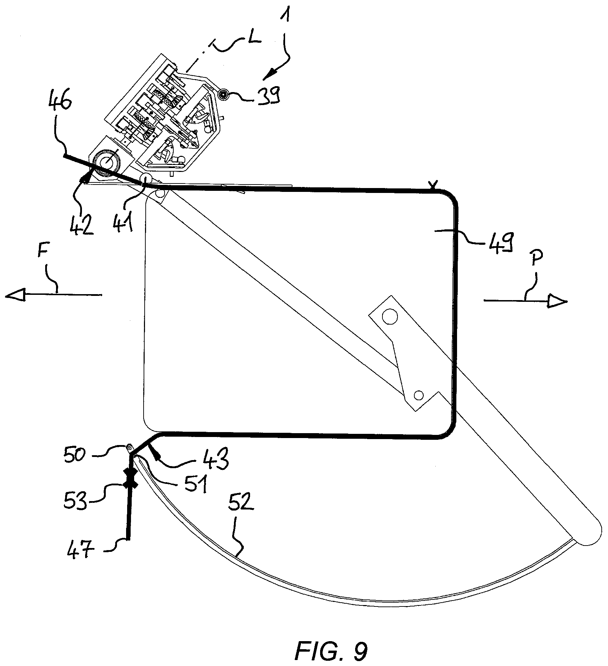

Im folgenden wird anhand der Figuren 9 bis 16 der Bindeablauf anhand von schematischen Darstellungen der gesamten Bindeeinrichtung einer Ballenpresse unter Verwendung einer Bindenadel mit zwei Rollen dargestellt. Auf bekannte Elemente zur Garnführung, Garnspannung und Garnbremsung wurde in den Darstellungen der Übersichtlichkeit halber verzichtet.

Figur 9 zeigt die Ausgangsstellung der Bindeeinrichtung. Der obere Garnstrang 42 verläuft von der (nicht dargestellten) oberen Garnrolle über die Garnumlenkrolle 41 zu der Oberseite eines Ballens 49. Der Ballen 49 wird in Richtung des Pfeils P, der die Pressrichtung anzeigt, gepresst und ausgeworfen. Der Pfeil F gibt die Fahrtrichtung der Ballenpresse an, auf den sich die Begriffe "vorne" und "hinten" beziehen. Nahe einer hinteren Kante des Ballens 49 ist der obere Garnstrang 42 mit einem unteren Garnstrang 43 verknotet. Der untere Garnstrang 43 verläuft an der hinteren Seite des Ballens 49 entlang nach unten und entlang der Ballenunterseite nach vorne, wo er zwischen zwei Rollen 50, 51 der Bindenadel 52 verläuft. Von da aus verläuft er weiter durch eine optional vorhandene schaltbare Garnklemme 53 über Fadenführungen zu einer unteren Garnrolle (nicht dargestellt).

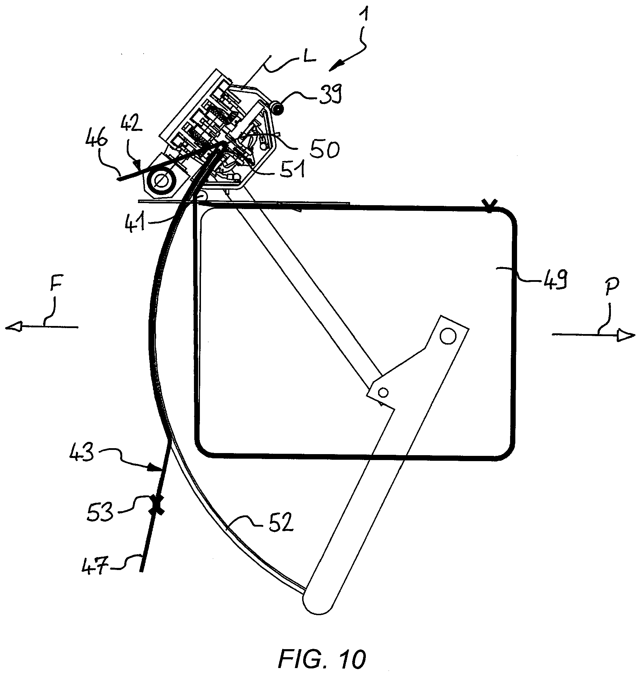

Nach dem Auslösen der Bindung ist, wie in Figur 10 dargestellt, die Bindenadel 52 durch den Presskanal, durch den der Ballen 49 gepresst wird, und hier nicht explizit dargestellt ist, geschwenkt und hat dabei den unteren Garnstrang 43 nach oben überführt. Oberhalb des Presskanals, d.h. oberhalb des Ballens 49, hat die Bindenadel 52 mit ihrer vorderen Rolle 50 den oberen Garnstrang 42 erfasst und bewegt beide Garnstränge 42, 43 in den Knoterbereich. Die Knoterelemente, d.h. Garnriegel 30, 30' und Reservehalter 21, sind noch in ihrer Ausgangsposition. Lediglich die Knoterhaken 11, 12 sind in eine Garnübernahmeposition verdreht.

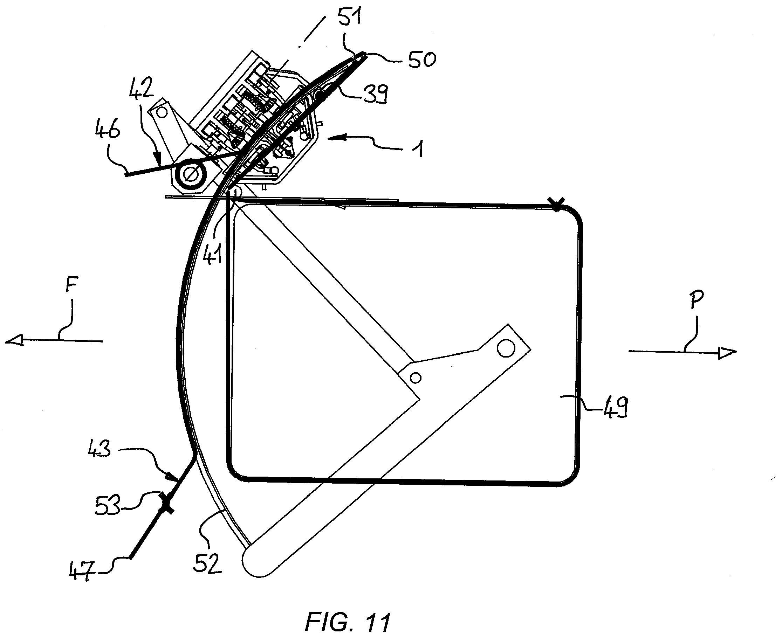

In Figur 11 befindet sich die Bindenadel 52 nahezu in ihrer obersten Position. Die Lage der Garnstränge 42, 43 im Knoterbereich und die Positionierung der Knoterelemente entsprechen der Darstellung gemäß Figur 3.

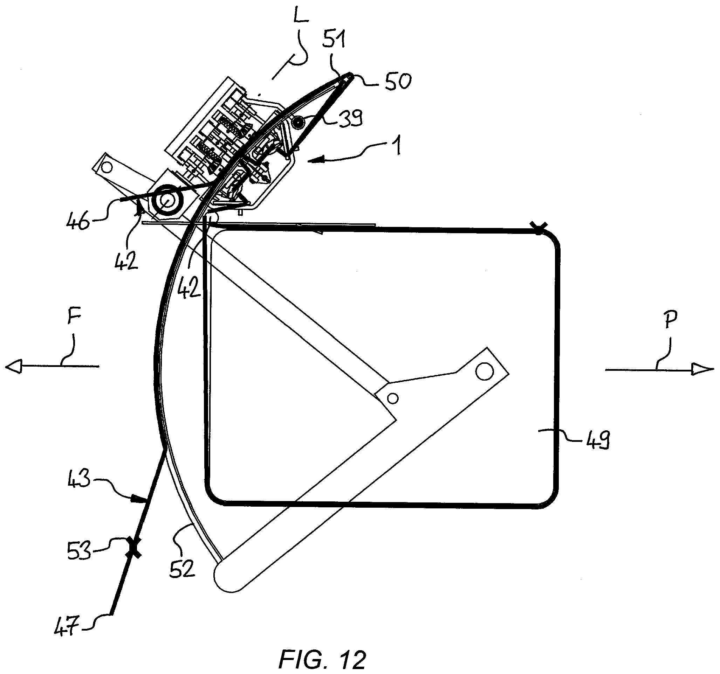

Figur 12 zeigt die Gesamtdarstellung der Bindeeinrichtung, die der Position in Figur 4 entspricht.

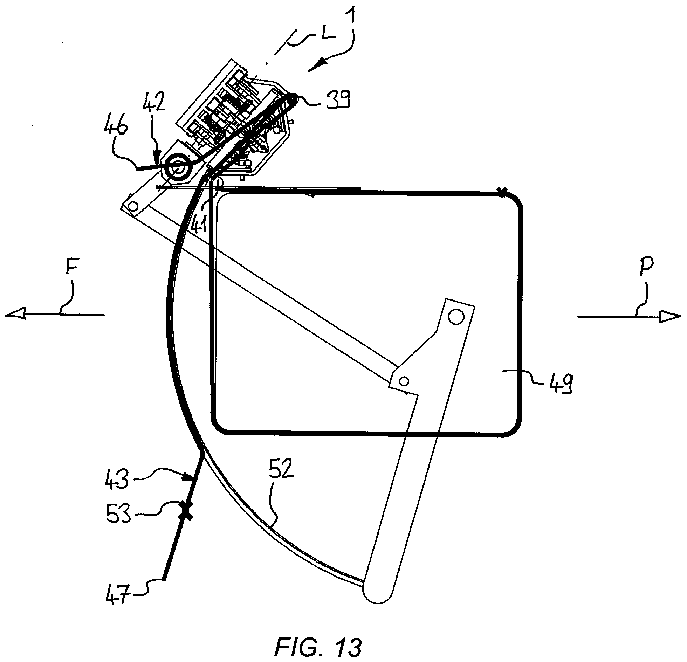

Figur 13 entspricht in ihrer Position der Figur 5. Es ist zu erkennen, dass die Bindenadel 52 den Knoterbereich wieder verlassen hat, dabei den oberen Garnstrang 42 freigegeben hat und den unteren Garnstrang 43 auf die Umlenkrolle 39 abgelegt hat.

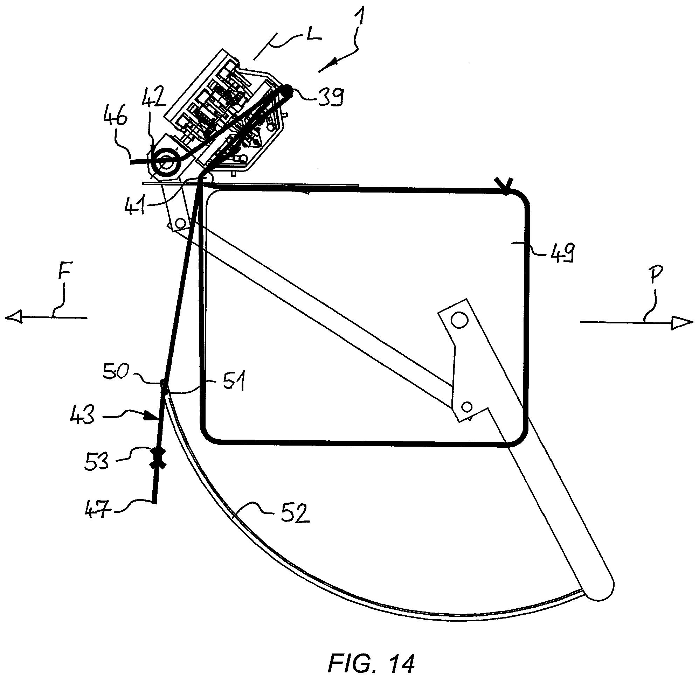

In Figur 14 ist der Hub der Bindenadel 52 annähernd abgeschlossen. Die Position des Garnknoters 1 entspricht der gemäß Figur 6.

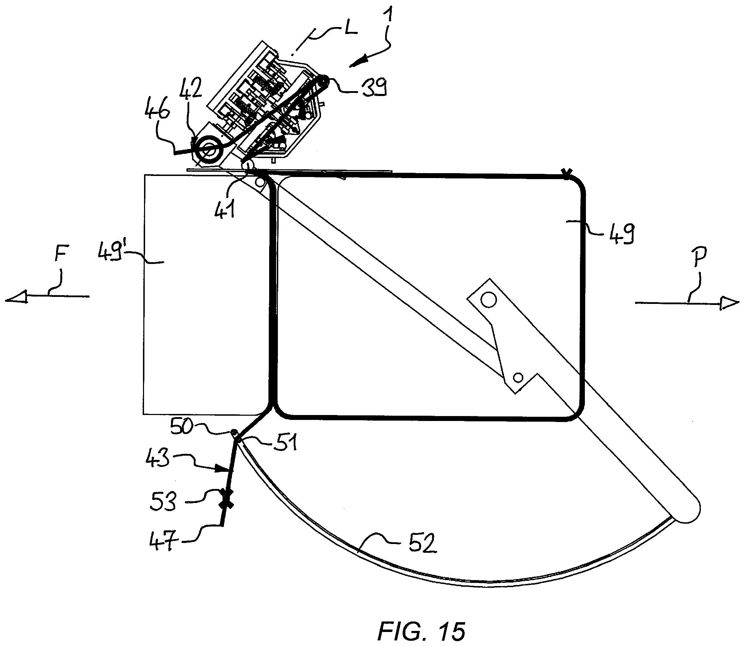

Figur 15 zeigt die gesamte Bindeeinrichtung nach Beendigung des Bindevorgangs. Die Bindenadel 52 befindet sich wieder in ihrer Ausgangsstellung, ebenso wie die Knoterhaken 11, 12 des Garnknoters 1. Die Knoten sind jedoch noch auf den Knoterhaken 11, 12 angeordnet. Die Position entspricht der Darstellung gemäß Figur 8.

Im weiteren Verlauf des Pressvorgangs werden die Garnstränge 42, 43 zwischen dem hinteren fertigen Ballen 49 und den neuen Ballen 49' eingepresst. Beim Weiterschieben der Ballen 49, 49' ziehen die Garnstränge 42, 43 den Knoten vom ersten Knoterhaken 11. Durch das Einpressen des unteren Garnstrangs 43 zwischen den beiden Ballen 49, 49' wird beim Weiterschieben der Ballen 49, 49' der untere Garnstrang 43 auf Zug beansprucht, wobei dieser über die Garnumlenkrolle 41 und die Umlenkrolle 39 den Knoten vom zweiten Knoterhaken 12 abzieht.

Für den Fall, dass die Einpresskraft zwischen den Ballen 49, 49' nicht ausreicht, um den zweiten Knoten vom zweiten Knoterhaken 12 abzuziehen, was z.B. bei sehr losem Pressen auftreten kann, kann mit einer schaltbaren Garnklemme 53 der untere Garnstrang 43 direkt nach Ende der Bewegung der Bindenadel 52 blockiert werden. Somit wird der gesamte Garnnachzug, der beim Verschieben der Ballen 49, 49' im Presskanal erforderlich ist, an dem oberen Garnstrang 42 wirksam und zieht den zweiten Knoten ab. Danach wird die Garnklemme 53 wieder gelöst und es können beim weiteren Pressen beide Garnstränge 42, 43 abgezogen werden.

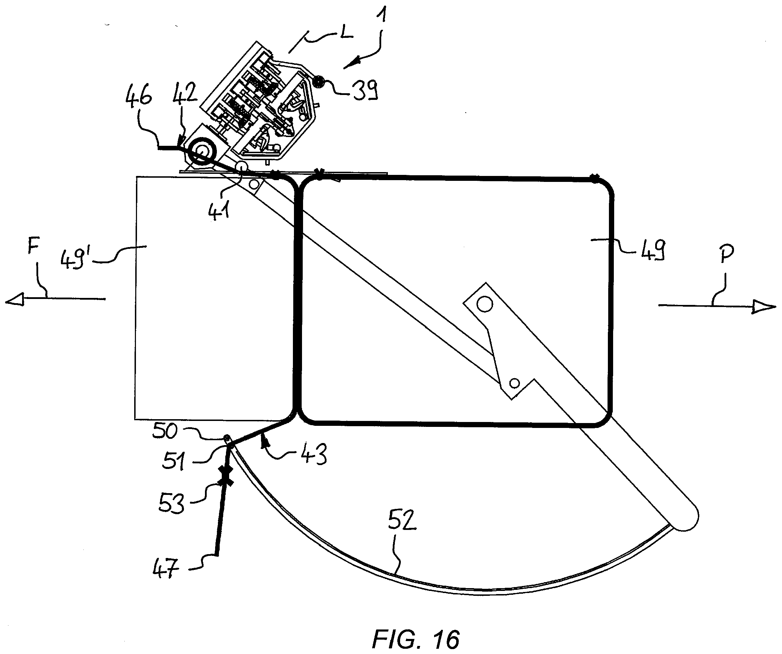

Der Zustand nach dem Abziehen der Knoten ist in Figur 16 dargestellt.

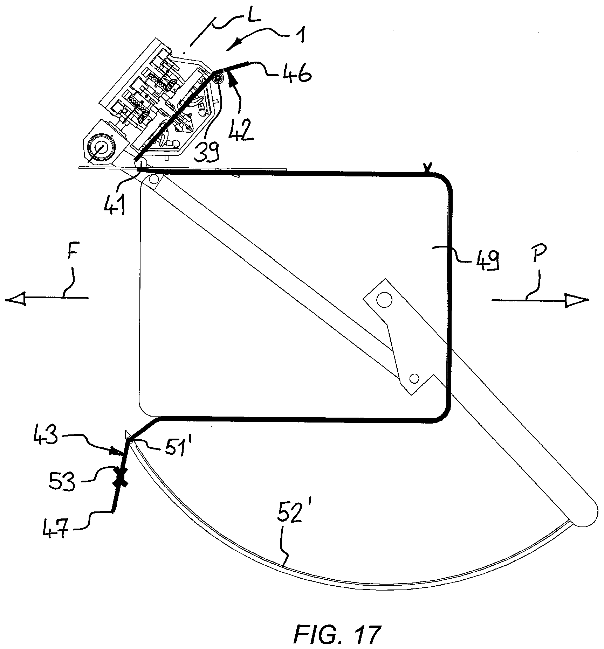

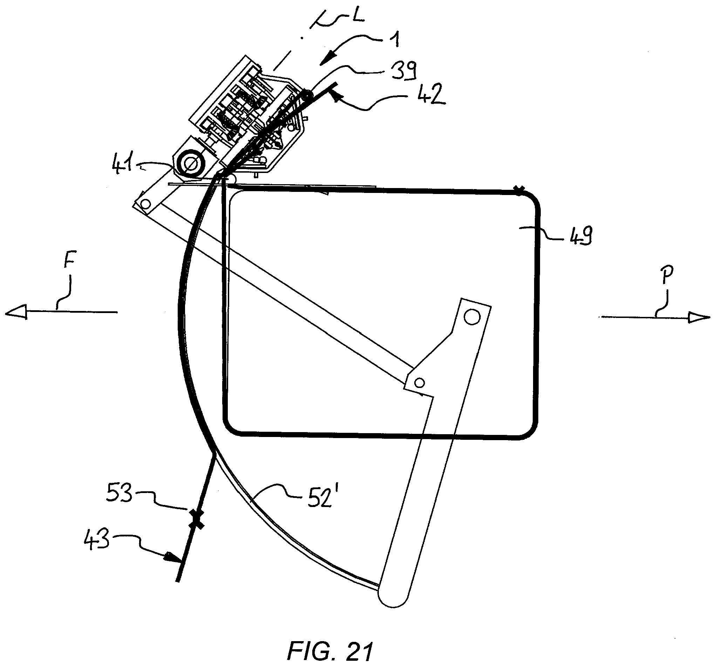

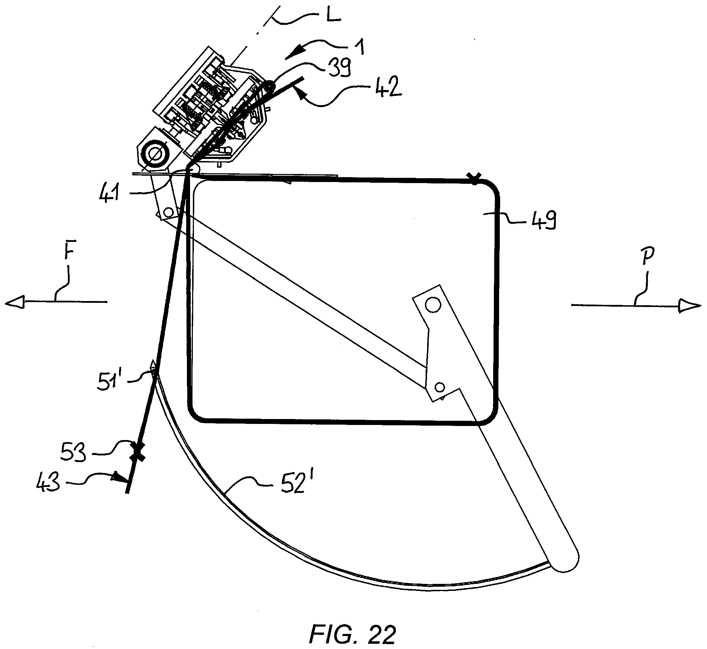

In den Figuren 17 bis 24 wird analog zum Bindeablauf gemäß der Figuren 2 bis 16 ein alternativer Bindeablauf unter Verwendung einer sogenannten spitzen Bindenadel 52' dargestellt.

Figur 17 zeigt den wesentlichen Unterschied einer spitzen Bindenadel 52' zu einer Bindenadel mit zwei Rollen. Die spitze Bindenadel 52' weist nur eine Rolle 51' auf. Der obere Garnstrang 42 wird zudem in Fahrtrichtung betrachtet von hinten über die Umlenkrolle 39 an dem zweiten Knoterhaken 12 vorbei über den Reservehalter 21 an dem ersten Knoterhaken 11 vorbei zur Garnumlenkrolle 41 geführt. Alles weitere entspricht der Bindeeinrichtung gemäß der Figuren 9 bis 16.

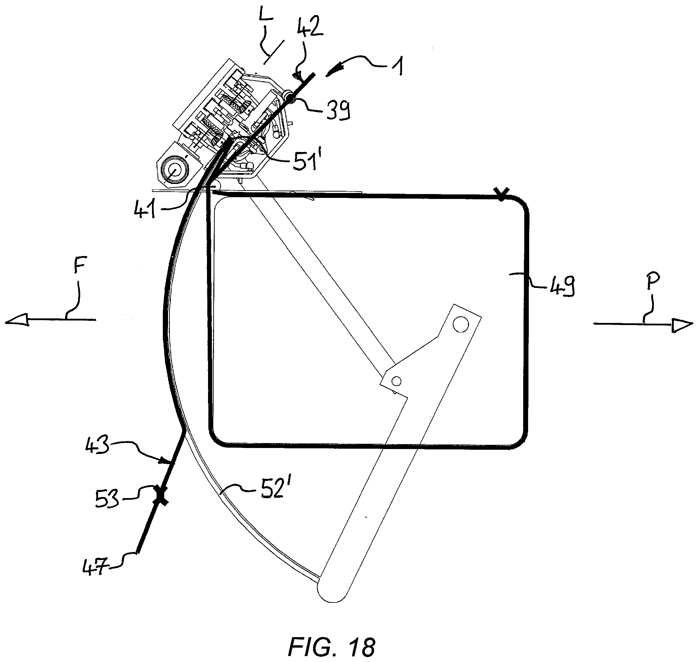

Aus Figur 18 wird deutlich, dass die Bindenadel 52' bei ihrer Aufwärtsbewegung nur den unteren Garnstrang 43 nach oben in den Knoterbereich überführen muss, da der obere Garnstrang 42 sich bereits im Knoterbereich befindet.

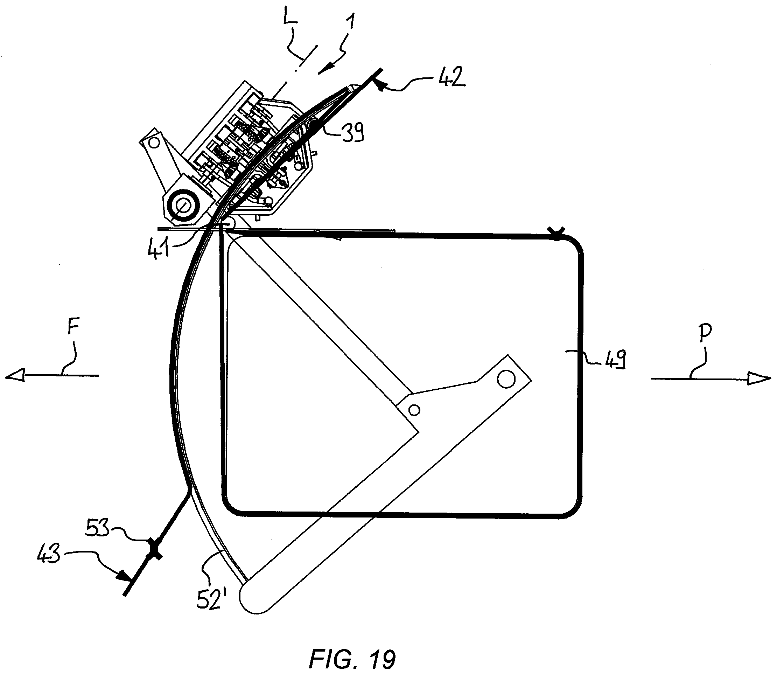

Die Garnführung gemäß Figur 19 entspricht derjenigen gemäß Figur 11, wobei der obere Garnstrang 42 nicht über den Rücken der Bindenadel 52' verläuft.

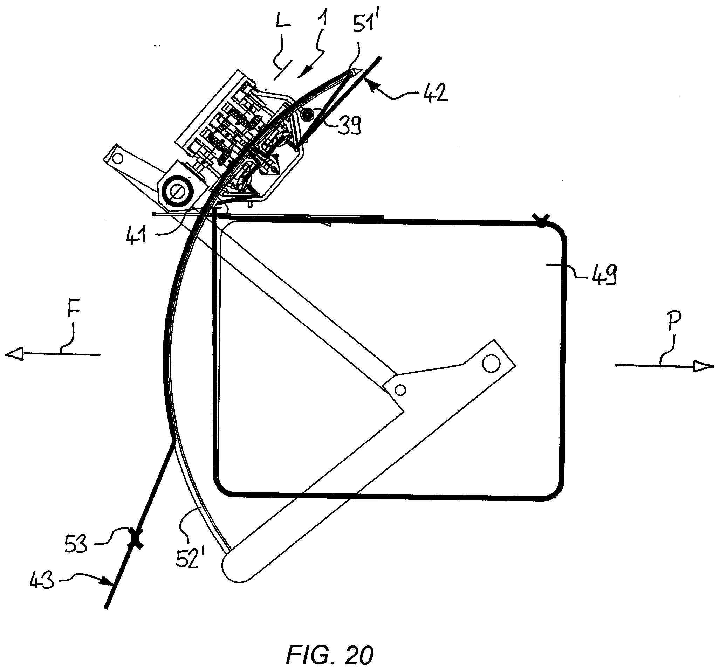

Der weitere Bindeablauf gemäß der Figuren 20, 21 und 22 entspricht genau dem Bindeablauf unter Verwendung einer Bindenadel mit zwei Rollen, wie dies vorangehend im Zusammenhang mit den Figuren 9 bis 16 erläutert wurde.

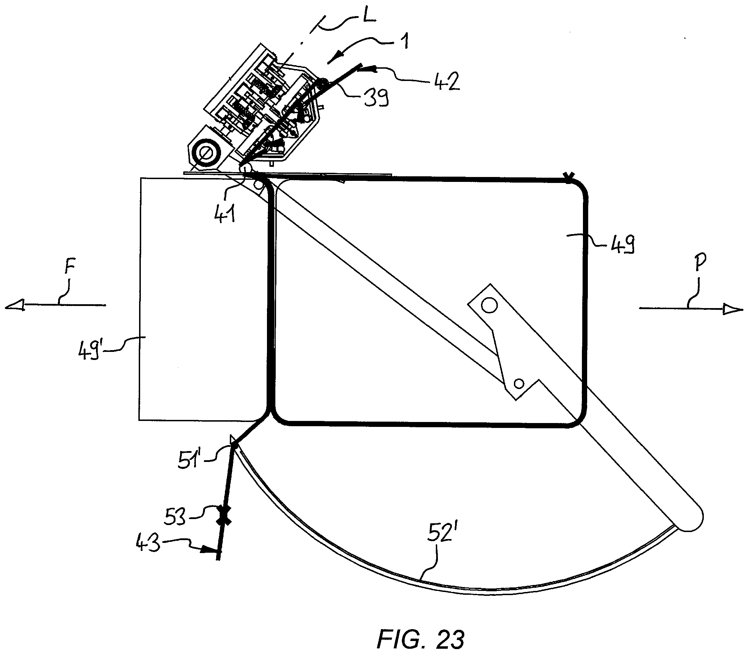

In Figur 23 ist zu erkennen, dass vor dem Abziehen des zweiten Knotens vom zweiten Knoterhaken 12 nur der untere Garnstrang 43 um die Umlenkrolle 39 verläuft. Der obere Garnstrang 42 verläuft direkt über die entsprechende Garnführung zur oberen Garnrolle.

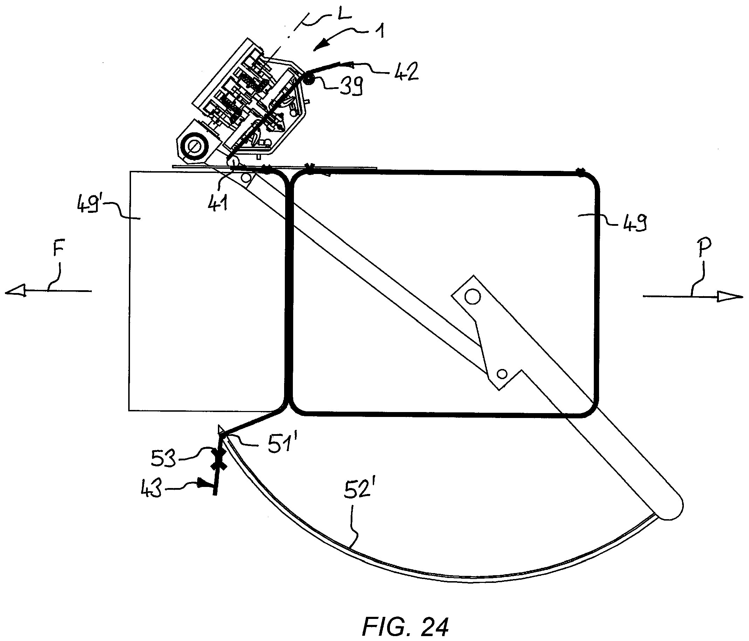

Nach dem Abziehen der Knoten von den Knoterhaken 11, 12 wird der zweite Knoten vom zweiten Knoterhaken 12 vom unteren Garnstrang 43 über die Umlenkrolle 39, den Reservehalter 21 und die Garnumlenkrolle 41 gezogen und auf dem Ballen abgelegt, wie dies in Figur 24 dargestellt ist.

Bei beiden Versionen der Bindenadel, d.h. einer Bindenadel mit zwei Rollen oder einer spitzen Bindenadel, wird der zweite Knoten nur durch den unteren Garnstrang 43 vom zweiten Knoterhaken 12 abgezogen, da bei dem beschriebenen Bindeablauf der Knotenabzug nur durch die Ballenbewegung im Presskanal erfolgt und der obere Garnstrang 42 nach dem Bindevorgang von dieser Seite keine Zugkraft erhält. Daher erscheint es notwendig, zumindest eine ausreichende Zugkraft vom unteren Garnstrang 43 bereitzustellen, die unabhängig von der Pressdichte zur Verfügung gestellt wird. Eine verhältnismäßig einfache Maßnahme stellt die oben beschriebene schaltbare Garnklemme 53 dar. Alternativ sind auch aktive Vorrichtungen denkbar, die direkt Zug auf den oberen Garnstrang 42 ausüben.

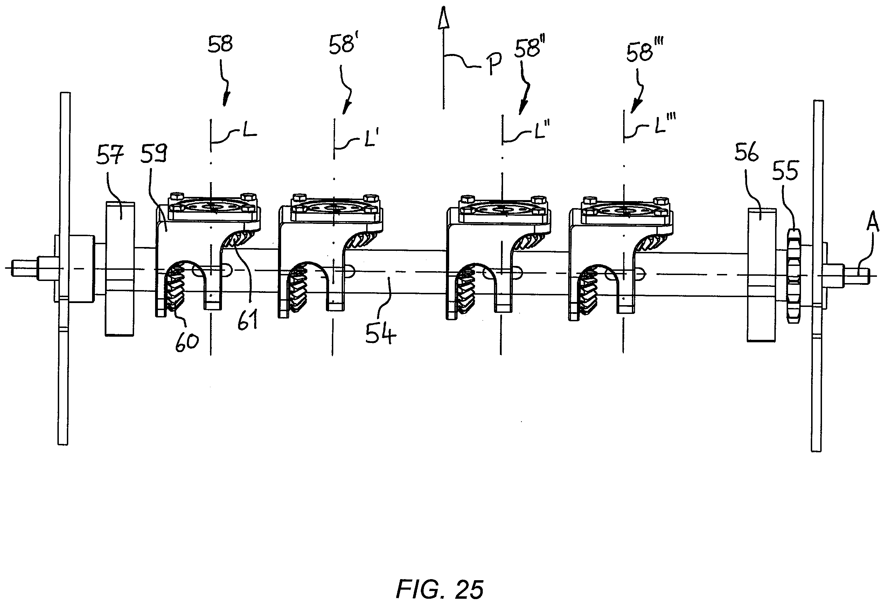

Figur 25 zeigt eine Knoterantriebswelle 54, welche über ein Ritzel 55 um eine Antriebsachse A drehend antreibbar ist. Die Knoterantriebswelle 54 verläuft in der Regel quer über dem Presskanal einer Großballenpresse. Die Knoterantriebswelle 54 ist über zwei Lager 56, 57 drehbar auf dem Presskanal befestigt. Die Knoterantriebswelle 54 trägt vier Winkelgetriebe 58, 58' 58", 58"', wobei im folgenden das in Figur 25 links dargestellte Winkelgetriebe 58 näher erläutert wird. Alle Winkelgetriebe 58, 58' 58", 58'" sind identisch aufgebaut. Das Winkelgetriebe 58 umfasst ein Gehäuse 59, welches an dem Presskanal bzw. an einem Rahmen der Großballenpresse befestigt ist und somit drehfest gegenüber der Knoterantriebswelle 54 gehalten ist. Das Winkelgetriebe 58 umfasst ferner ein erstes Kegelrad 60, das drehfest mit der Knoterantriebswelle 54 verbunden ist und welches mit einem Abtriebselement in Form eines zweiten Kegelrades 61 in Verzahnungseingriff steht, wobei das zweite Kegelrad 61 drehbar im Gehäuse 59 gelagert ist. Das zweite Kegelrad 61 dient als Abtriebselement, welches mit der Zwischenwelle des Garnknoters drehfest verbunden wird. Das zweite Kegelrad 61 ist daher um die Längsachse L der Zwischenwelle des Garnknoters drehbar gelagert.

### Bezugszeichenliste

- 1: Garnknoter
- 2: Knoterrahmen
- 3: Zwischenwelle
- 4: Welleneingang
- 5: erstes Antriebskegelrad
- 6: zweites Antriebskegelrad
- 7: erstes Abtriebskegelrad
- 8: zweites Abtriebskegelrad
- 9: erste Knoterhakenwelle
- 10: zweite Knoterhakenwelle
- 11: erster Knoterhaken
- 12: zweiter Knoterhaken
- 13: erstes Hakenteil
- 14: zweites Hakenteil
- 15: erste Knoterzunge
- 16: zweite Knoterzunge
- 17: erste Knoterhakensteuerkurve
- 18: zweite Knoterhakensteuerkurve
- 19: erste Knoterzungenrolle
- 20: zweite Knoterzungenrolle
- 21: Reservehalter
- 22: Hebel
- 23: Rolle
- 24: Steuerkurve
- 25: Koppelstange
- 26: Hakenabschnitt
- 27: Messer
- 28: Messerrücken
- 29: Schneide
- 30, 30': Garnriegel
- 31, 31': Hebel
- 32: Rolle
- 33: Steuerkurve
- 34: Koppelstange
- 35: Umlenkvorrichtung
- 36: Schwenkarm
- 37: Rolle
- 38: Steuerkurve
- 39: Umlenkrolle
- 40: Bügel
- 41: Garnumlenkrolle
- 42: oberer Garnstrang
- 43: unterer Garnstrang
- 44: zum Ballen führendes Ende des oberen Garnstrangs
- 45: zum Ballen führendes Ende des unteren Garnstrangs
- 46: zur Garnrolle führendes Ende des oberen Garnstrangs
- 47: zur Garnrolle führendes Ende des unteren Garnstrangs
- 48: Anschrägung
- 49,49': Ballen
- 50: Rolle
- 51, 51': Rolle
- 52,52': Bindenadel
- 53: Garnklemme
- 54: Knoterantriebswelle
- 55: Ritzel
- 56: Lager
- 57: Lager
- 58, 58', 58", 58"': Winkelgetriebe
- 59: Gehäuse
- 60: erstes Kegelrad
- 61: zweites Kegelrad
- F: Fahrtrichtung
- K1: erste Knoterhakenachse
- K2: zweite Knoterhakenachse
- L, L', L", L'": Längsachse
- P: Pressrichtung
- R, R': Riegelachse
- S1: erste Schwenkachse
- S2: zweite Schwenkachse
- S3: dritte Schwenkachse

## Patentansprüche

1. Garnknoter (1) mit
einem Knoterrahmen (2),
einer Zwischenwelle (3), die am Knoterrahmen (2) um eine Längsachse (L) drehbar gelagert ist und die einen Welleneingang (4) zum Verbinden der Zwischenwelle (3) mit einem Abtriebselement (61) einer Knoterantriebswelle (54) aufweist, und
mindestens eine um eine Knoterhakenachse (K1, K2) drehbar am Knoterrahmen (2) gelagerte Knoterhakenwelle (9,10), die mit der Zwischenwelle (3) antriebsverbunden ist und einen Knoterhaken (11, 12) zum Bilden eines Knotens trägt,
**dadurch gekennzeichnet,**
**dass** der Garnknoter (1) als eigenständige Baueinheit ausgebildet ist, wobei der Garnknoter (1) über den Welleneingang (4) der Zwischenwelle (3) lösbar mit der Knoterantriebswelle (54) antriebsverbindbar ist.

2. Garnknoter nach Anspruch 1,
**dadurch gekennzeichnet,**
**dass** die Knoterhakenachse (K1, K2) die Längsachse (L) schneidet oder mit Abstand kreuzt.

3. Garnknoter nach einem der vorangehenden Ansprüche,
**dadurch gekennzeichnet,**
**dass** zwei Knoterhakenwellen (9, 10) vorgesehen sind, die jeweils um eine Knoterhakenachse (K1, K2) drehbar am Knoterrahmen (2) gelagert sind und die jeweils mit der Zwischenwelle (3) antriebsverbunden sind.

4. Garnknoter nach Anspruch 3,
**dadurch gekennzeichnet,**
**dass** die Knoterhakenachsen (K1, K2) der beiden Knoterhakenwellen (9, 10) parallel zueinander angeordnet sind.

5. Garnknoter nach einem der vorangehenden Ansprüche,
**dadurch gekennzeichnet,**
**dass** die zumindest eine Knoterhakenwelle (9, 10) über eine Zahnradverbindung (5, 7; 6, 8), vorzugsweise eine Kegelradverbindung, mit der Zwischenwelle (3) antriebsverbunden ist.

6. Garnknoter nach Anspruch 5,
**dadurch gekennzeichnet,**
**dass** die Zahnradverbindung ein Zahnrad (5, 6) aufweist, welches drehfest auf der Zwischenwelle (3) sitzt und eine umlaufende unterbrechungsfreie Verzahnung aufweist.

7. Garnknoter nach einem der vorangehenden Ansprüche,
**dadurch gekennzeichnet,**
**dass** ein Reservehalter (21) zur vorübergehenden Bildung einer Garnreserve vorgesehen ist, der von der Zwischenwelle (3) angetrieben ist und an dem Knoterrahmen (2) verstellbar gehalten ist.

8. Garnknoter nach einem der vorangehenden Ansprüche,
**dadurch gekennzeichnet,**
**dass** zumindest ein Garnriegel (30, 30') zum Andrücken von Garnsträngen (42, 43) an den Knoterhaken (11, 12) der zumindest einen Knoterhakenwelle (9, 10) vorgesehen ist, der von der Zwischenwelle (3) angetrieben ist und der an dem Knoterrahmen (2) verstellbar gehalten ist.

9. Garnknoter nach einem der vorangehenden Ansprüche,
**dadurch gekennzeichnet,**
**dass** eine Umlenkvorrichtung (39) zum Umlenken von Garnsträngen (42, 43) vorgesehen ist, die an dem Knoterrahmen (2) verstellbar gehalten und von der Zwischenwelle (3) angetrieben ist.

10. Garnknoter nach einem der Ansprüche 7 bis 9,
**dadurch gekennzeichnet,**
**dass** zumindest eine der Vorrichtungen aus der Gruppe Reservehalter (21), Garnriegel (30, 30') und Umlenkvorrichtung (39) über eine Steuerkurve (24, 38) auf der Zwischenwelle (3) angetrieben und gesteuert ist.

11. Garnknoter nach Anspruch 9,
**dadurch gekennzeichnet,**
**dass** zumindest eine der Vorrichtungen aus der Gruppe Reservehalter (21), Garnriegel (30, 30') und Umlenkvorrichtung (39) einen Hebel (22, 31, 31') aufweist, der um eine parallel zur Längsachse (L) angeordnete Schwenkachse (S2) am Knoterrahmen (2) schwenkbar ist und mit einem Steuerelement (23, 32, 37) gegen die jeweilige Steuerkurve (24, 38) der Zwischenwelle (3) mit Kraft beaufschlagt ist.

12. Garnknoter nach Anspruch 11,
**dadurch gekennzeichnet,**
**dass** zwischen dem Hebel (22, 31, 31') und der jeweiligen Vorrichtung aus der Gruppe Reservehalter (21), Garnriegel (30, 30') und Umlenkvorrichtung (39) eine Koppelstange (34, 34') gelenkig angeordnet ist.

13. Verfahren zur Bildung zweier Knoten mittels eines Garnknoters (1) nach einem der Ansprüche 3-12, der zwei Knoterhakenwellen (9, 10) aufweist, mit den Verfahrensschritten:
Positionieren eines oberen Garnstrangs (42) und eines unteren Garnstrangs (43) in einen Arbeitsbereich eines ersten Knoterhakens (11) und eines zweiten Knoterhakens (12) des Garnknoters (1), wobei sich die Knoterhaken (11, 12) jeweils in einer Ausgangsstellung befinden,
Drehen der Knoterhaken (11, 12) von der Ausgangsstellung in eine Auflagestellung, in der der obere Garnstrang (42) und der untere Garnstrang (43) auf die Knoterhaken (11, 12) zu liegen kommen,
anschließendes Drehen der Knoterhaken (11, 12) um eine Umdrehung zur Bildung jeweils einer Schlaufe aus beiden Garnsträngen (42, 43), anschließendes Trennen der Garnstränge (42, 43) zwischen den Knoterhaken (11, 12) und
abschließendes Drehen der Knoterhaken (11, 12) weiter bis zur Ausgangsstellung.

14. Verfahren nach Anspruch 13,
**dadurch gekennzeichnet,**
**dass** die Knoterhaken (11, 12) je Knotvorgang um zwei volle Umdrehungen gedreht werden.

15. Verfahren nach einem der Ansprüche 13 oder 14,
**dadurch gekennzeichnet,**
**dass** zumindest einer der Garnstränge (42, 43) mittels einer Bindenadel (52, 52') entlang einer Garnzuführrichtung in den Arbeitsbereich der Knoterhaken (11, 12) gebracht wird,
**dass** in Ausgangsstellung der Knoterhaken (11, 12) die gebildeten Schlaufen entgegen der Garnzuführrichtung vom ersten Knoterhaken (11) und in Garnzuführrichtung vom zweiten Knoterhaken (12) durch Fortbewegung von Pressgut in einem Presskanal abgezogen werden.

16. Verfahren nach einem der Ansprüche 13 bis 15,
**dadurch gekennzeichnet,**
**dass** beim Drehen der Knoterhaken (11, 12) zum Ausbilden von Schlaufen je Knoterhaken ein Garnriegel (30, 30') betätigt wird, der den oberen Garnstrang (42) und den unteren Garnstrang (43) über ein Hakenteil (13, 14) des Knoterhakens (11, 12) hält, und
**dass** mit dem Betätigen der Garnriegel (30, 30') eine Umlenkrolle (39) einer Umlenkvorrichtung derart betätigt wird, dass der obere Garnstrang (42) und der untere Garnstrang (43) vom zweiten Knoterhaken (11, 12) in Garnzuführrichtung zur Umlenkrolle (39) und von dieser entgegen der Garnzuführrichtung bis zum Presskanal geführt werden.

17. Verfahren nach einem der Ansprüche 13 oder 14,
**dadurch gekennzeichnet,**
**dass** Schlaufenknoten mit nicht durchgezogenen Garnenden und ohne Abfallstück gebildet werden.

## Claims

1. Twine knotter (1) having
a knotter frame (2),
an intermediate shaft (3), which is rotatably supported around a longitudinal axis (L) on the knotter frame (2) and which has a shaft input (4) for connecting the intermediate shaft (3) to an output element (61) of a knotter drive shaft (54), and
at least one knotter hook shaft (9, 10), supported rotatably around a knotter hook axis (K1, K2) on the knotter frame (2), connected drive-wise to the intermediate shaft (3) and carrying a knotter hook (11, 12) for forming a knot,
**characterised in**
**that** the twine knotter (1) is formed as an independent unit, wherein the twine knotter (1) is drivingly and detachably connectable via the shaft input (4) of the intermediate shaft (3) to the knotter drive shaft (54).

2. Twine knotter according to claim 1,
**characterised in**
**that** the knotter hook axis (K1, K2) intersects the longitudinal axis (L) or crosses the same at a distance.

3. Twine knotter according to any one of the preceding claims,
**characterised in**
**that** two knotter hook shafts (9, 10) are provided, each of which being rotatably supported around a knotter hook axis (K1, K2) on the knotter frame (2) and which are drivingly connected to the intermediate shaft (3).

4. Twine knotter according to claim 3,
**characterised in**
**that** the knotter hook axes (K1, K2) of the two knotter hook shafts (9, 10) are arranged parallel to each other.

5. Twine knotter according to any one of the preceding claims,
**characterised in**
**that** the at least one knotter hook shaft (9, 10) is drivingly connected via a gear connection (5, 7; 6, 8), preferably a bevel-gear connection, to the intermediate shaft (3).

6. Twine knotter according to claim 5,
**characterised in**
**that** the gear connection has a gear (5, 6), which sits torque-proof on the intermediate shaft (3) and has a circumferential uninterrupted toothing.

7. Twine knotter according to any one of the preceding claims,
**characterised in**
**that** a reserve holder (21) is provided for temporarily forming a twine reserve, which reserve holder (21) is driven by the intermediate shaft (3) and is movably held on the knotter frame (2).

8. Twine knotter according to any one of the preceding claims,
**characterised in**
**that** at least one twine catch (30, 30') is provided for pressing twine threads (42, 43) against the knotter hook (11, 12) of the at least one knotter hook shaft (9, 10) and which is driven by the intermediate shaft (3) and is movably held on the knotter frame (2).

9. Twine knotter according to any one of the preceding claims,
**characterised in**
**that** a redirection device (39) is provided for redirecting twine threads (42, 43), which redirection device (39) is held movably on the knotter frame (2) and which is driven by the intermediate shaft (3).

10. Twine knotter according to any one of claims 7 to 9,
**characterised in**
**that** at least one device selected from the group of reserve holder (21), twine catch (30, 30') and redirection device (39) is driven and controlled via a control cam (24, 38) on the intermediate shaft (3).

11. Twine knotter according to claim 9,
**characterised in**
**that** at least one device selected from the group of reserve holder (21), twine catch (30, 30') and redirection device (39) has a lever (22, 31, 31'), which is pivotable around a pivot axis (S2) arranged parallel to the longitudinal axis (L) on the knotter frame (2) and which is forcer loaded by a control element (23, 32, 37) against the respective control cam (24, 38) of the intermediate shaft (3).

12. Twine knotter according to claim 11,
**characterised in**
**that** a coupling rod (34, 34') is articulatedly arranged between the lever (22, 31, 31') and the respective device selected from the group of reserve holder (21), twine catch (30, 30') and redirection device (39).

13. Method for forming two knots by means of a twine knotter (1) according to any one of claims 3 to 12, which has two knotter hook shafts (9, 10), with the following method steps:
positioning an upper twine thread (42) and a lower twine thread (43) in an operating area of a first knotter hook (11) and of a second knotter hook (12) of the twine knotter (1), wherein both knotter hooks (11, 12) are in a starting position,
rotating the knotter hooks (11, 12) from the starting position into placement position, in which the upper twine thread (42) and the lower twine thread (43) come to rest on the knotter hooks (11, 12),
subsequently rotating the knotter hooks (11, 12) for one revolution for forming respectively one loop from both twine threads (42, 43),
subsequently cutting the twine threads (42, 43) between the knotter hooks (11, 12) and
final rotating of the knotter hooks (11, 12) further up to the starting position.

14. Method according to claim 13,
**characterised in**
**that** the knotter hooks (11, 12) are rotated for each knotting process around two full revolutions.

15. Method according to claim 13 or 14,
**characterised in**
**that** at least one of the twine threads (42, 43) is brought by means of a binding needle (52, 52') along a twine feeding direction into the operating area of the knotter hooks (11, 12),
**that** in the starting position of the knotter hooks (11, 12) the formed loops are pulled off against the twine feeding direction from the first knotter hook (11) and in twine feeding direction from the second knotter hook (12) by means of advancing material to be pressed in a pressing channel.

16. Method according to any claim 13 to 15,
**characterised in**
**that** during rotating of the knotter hooks (11, 12) for forming loops, one twine catch (30, 30') is actuated for each knotter hook, which holds the upper twine thread (42) and the lower twine thread (43) on a hook portion (13, 14) of the knotter hook (11, 12), and
**that**, when actuating the twine catch (30, 30'), a redirection roller (39) of a redirection device is actuated such, that the upper twine thread (42) and the lower twine thread (43) are guided from the second knotter hook (11, 12) in twine feeding direction to the redirection roller (39) and therefrom against the twine feeding direction up to the pressing channel.

17. Method according to claim 13 or 14,
**characterised in**
**that** the loop knots are formed with twine ends not pulled through and without waste piece.

## Revendications

1. Noueur de ficelles (1) comprenant
un cadre de noueur (2),
un arbre intermédiaire (3), qui est logé sur le cadre de noueur (2) en étant rotatif autour d'un axe longitudinal (L) et qui compote une entrée d'arbre (4) destinée à relier l'arbre intermédiaire (3) avec un élément de sortie (61) d'un arbre d'entraînement du noueur (54), et
au moins un arbre de crochet de noueur (9,10), logé sur le cadre de noueur (2), en rotation autour d'un axe de crochet de noueur (K1, K2), qui est relié en entraînement avec l'arbre intermédiaire (3) et qui porte un crochet de noueur (11, 12) destiné à former un noeud,
**caractérisé en ce que** le noueur de ficelles (1) est conçu sous la forme d'un module autonome, le noueur de ficelles (1) pouvant être relié en entraînement de manière amovible, par l'intermédiaire de l'entrée d'arbre (4) de l'arbre intermédiaire (3) avec l'arbre d'entraînement du noueur (54).

2. Noueur de ficelles selon la revendication 1,
**caractérisé en ce que** l'axe de crochet de noueur (K1, K2) recoupe l'axe longitudinal (L) ou le croise à distance.

3. Noueur de ficelles selon l'une quelconque des revendications précédentes, **caractérisé en ce que** deux arbres de crochet de noueur (9, 10) sont prévus, qui sont logés chacun en rotation autour d'un axe de crochet de noueur (K1, K2) sur le cadre de noueur (2) et qui sont reliés en entraînement chacun avec l'arbre intermédiaire (3).

4. Noueur de ficelles selon la revendication 3, **caractérisé en ce que** les axes de crochet de noueur (K1, K2) des deux arbres de crochet de noueur (9, 10) sont placés à la parallèle l'un de l'autre.

5. Noueur de ficelles selon l'une quelconque des revendications précédentes, **caractérisé en ce que** l'au moins un arbre de crochet de noueur (9, 10) est relié en entraînement avec l'arbre intermédiaire (3) par l'intermédiaire d'une liaison par roue dentée (5, 7 ; 6, 8), de préférence d'une liaison par pignon conique.

6. Noueur de ficelles selon la revendication 5, **caractérisé en ce que** la liaison par roue dentée comporte une roue dentée (5, 6), laquelle est logée de manière solidaire en rotation sur l'arbre intermédiaire (3) et comporte une denture périphérique sans interruption.

7. Noueur de ficelles selon l'une quelconque des revendications précédentes, **caractérisé en ce qu'**il est prévu un conteneur de réserve (21) destiné à la création passagère d'une réserve de fil, qui est entraîné par l'arbre intermédiaire (3) et qui est maintenu de manière ajustable sur le cadre de noueur (2).

8. Noueur de ficelles selon l'une quelconque des revendications précédentes, **caractérisé en ce qu'**il est prévu au moins un verrouillage de ficelle (30, 30') destiné à appuyer des brins de ficelle (42, 43) sur le crochet de noueur (11, 12) de l'au moins un arbre de crochet de noueur (9, 10), qui est entraîné par l'arbre intermédiaire (3) et qui est maintenu de manière ajustable sur le cadre de noueur (2).

9. Noueur de ficelles selon l'une quelconque des revendications précédentes, **caractérisé en ce qu'**il est prévu un dispositif de renvoi (39) destiné à renvoyer des brins de ficelle (42, 43), qui est maintenu de manière ajustable sur le cadre de noueur (2) et qui est entraîné par l'arbre intermédiaire (3).

10. Noueur de ficelles selon l'une quelconque des revendications 7 à 9, **caractérisé en ce qu'**au moins l'un des dispositifs appartenant au groupe : conteneur de réserve (21), verrouillage de ficelle (30, 30') et dispositif de renvoi (39) est entraîné et commandé par une came de commande (24, 38) sur l'arbre intermédiaire (3).

11. Noueur de ficelles selon la revendication 9,
**caractérisé en ce qu'**au moins l'un des dispositifs appartenant au groupe : conteneur de réserve (21), verrouillage de ficelle (30, 30') et dispositif de renvoi (39) comporte un levier (22, 31, 31') qui est susceptible de pivoter autour d'un axe de pivotement (S2) sur le cadre de noueur (2) et qui par un élément de commande (23, 32, 37) est soumis par force contre la came de commande (24, 38) respective de l'arbre intermédiaire (3).

12. Noueur de ficelles selon la revendication 11,
caractérisé, **caractérisé en ce qu'**une bielle de couplage (34, 34') est placée de manière articulée entre le levier (22, 31, 31') et le dispositif respectif appartenant au groupe : conteneur de réserve (21), verrouillage de ficelle (30, 30') et dispositif de renvoi (39).

13. Procédé destiné à former deux noeuds au moyen d'un noueur de ficelles (1) selon l'une quelconque des revendications 3 à 12, lequel comporte deux arbres de crochet de noueur (9, 10), comportant les étapes de procédé :
du positionnement d'un brin de ficelle (42) supérieur et d'un brin de ficelle (43) inférieur dans une zone d'action d'un premier crochet de noueur (11) et d'un deuxième crochet de noueur (12) du noueur de ficelles (1), sachant que les crochets de noueur (11, 12) se trouvent chacun dans une position de départ,
de la rotation des crochets de noueur (11, 12) de la position de départ dans une position d'appui, dans laquelle le brin de ficelle (42) supérieur et le brin de ficelle (43) inférieur viennent reposer sur le crochet de noueur (11, 12),
de la rotation consécutive des crochets de noueur (11, 12) de la valeur d'un tour, pour former chaque fois une boucle à partir des deux brins de ficelle (42, 43),
de la séparation consécutive des brins de ficelle (42, 43) entre les crochets de noueur (11, 12) et de la rotation ultérieure finale des crochets de noueur (11, 12) jusqu'à la position de départ.

14. Procédé selon la revendication 13, **caractérisé en ce qu'**à chaque processus de nouage, on fait tourner les crochets de noueur (11, 12) de deux tours complets.

15. Procédé selon l'une quelconque des revendications 13 ou 14, **caractérisé,**
**en ce qu'**au moyen d'une aiguille de nouage (52, 52'), on amène les brins de ficelle (42, 43) le long d'une direction d'alimentation des ficelles dans la zone d'action du crochet de noueur (11, 12),
**en ce que** dans la position de départ du crochet de noueur (11, 12), on retire les boucles formées à l'encontre de la direction d'alimentation des ficelles du premier crochet de noueur (11) et dans la direction d'alimentation des ficelles du deuxième crochet de noueur (12), par déplacement en éloignement d'une matière pressée dans un canal de pressage.

16. Procédé selon l'une quelconque des revendications 13 à 15, **caractérisé,**
**en ce que** lors de la rotation des crochets de noueur (11, 12) pour former des boucles, on actionne pour chaque crochet de noueur un verrouillage de ficelle (30, 30') qui maintient le brin de ficelle (42) supérieur et le brin de ficelle (43) inférieur par l'intermédiaire d'une pièce de crochet (13, 14) du crochet de noueur (11, 12), et
**en ce que** par l'actionnement du verrouillage de ficelle (30, 30'), un galet de renvoi (39) d'un dispositif de renvoi est actionné de telle sorte que le brin de ficelle (42) supérieur et le brin de ficelle (43) inférieur soient guidés du deuxième crochet de noueur (11, 12) dans la direction d'alimentation des ficelles vers le galet de renvoi (39) et de celui-ci, à l'encontre de la direction d'alimentation des ficelles jusque vers le canal de pressage.

17. Procédé selon l'une quelconque des revendications 13 ou 14, **caractérisé en ce qu'**on forme des noeuds à boucle avec des extrémités de ficelle non traversantes et sans chute.
